# EUROPEAN PATENT APPLICATION

(11) **EP 4 487 937 A1**
(43) Date of publication of application: **08.01.2025**
(21) Application number: 23763517.2
(22) Date of filing: 01.03.2023
(51) Int. Cl.: B01D 53/06, B01D 53/22, B01D 53/26

(54) **ACIDIC GAS RECOVERY SYSTEM AND RECOVERY METHOD**

(30) Priority: 04.03.2022 JP 2022033320
(71) Applicant: NITTO DENKO CORPORATION, Ibaraki-shi Osaka 567-8680 (JP)
(72) Inventor: TANAKA, Shota, Ibaraki-shi, Osaka 567-8680 (JP); KATAGIRI, Makoto, Ibaraki-shi, Osaka 567-8680 (JP); FUKUMURA, Takuya, Ibaraki-shi, Osaka 567-8680 (JP); IHARA, Terukazu, Ibaraki-shi, Osaka 567-8680 (JP)
(74) Representative: Hoffmann Eitle
(86) International application number: PCT/JP2023/007689
(87) International publication number: WO 2023/167260

(57) **Abstract**

The present invention provides a new recovery system suitable for recovering acidic gas. A recovery system 100 of the present invention includes an adsorption device 10 and a membrane separation device 20. The adsorption device 10 has an adsorbent 11 that, in a state of having adsorbed acidic gas, comes into contact with regeneration gas 60 to desorb the acidic gas, and is configured to release desorption gas 61 including the regeneration gas 60 and the acidic gas. The membrane separation device 20 has a separation membrane 21 configured to separate the desorption gas 61 into a first gas 62 having a higher content of the acidic gas than the desorption gas 61 and a second gas 63 having a lower content of the acidic gas than the desorption gas 61.

## Description

### TECHNICAL FIELD

The present invention relates to a recovery system and a recovery method for acidic gas.

### BACKGROUND ART

An adsorption method and a membrane separation method have been developed as methods for recovering acidic gas from mixed gas including acidic gas such as carbon dioxide. In the adsorption method, by causing an adsorbent to adsorb the acidic gas included in the mixed gas, the acidic gas can be recovered. In the membrane separation method, by separating the acidic gas from the mixed gas using a separation membrane, the acidic gas can be recovered.

Patent Literature 1 discloses an example of an adsorbent that can be used in the adsorption method. Patent Literature 2 discloses an example of a separation membrane that can be used in the membrane separation method.

### CITATION LIST

### Patent Literature

| | |
|---|---|
| Patent Literature 1: | JP 2014-533195 A |
| Patent Literature 2: | JP 6186286 B |

### SUMMARY OF INVENTION

### Technical Problem

A new recovery system suitable for recovering acidic gas is required.

### Solution to Problem

The present invention provides a recovery system for acidic gas, including:
an adsorption device having an adsorbent that, in a state of having adsorbed acidic gas, comes into contact with regeneration gas to desorb the acidic gas, and configured to release desorption gas including the regeneration gas and the acidic gas; and
a membrane separation device having a separation membrane configured to separate the desorption gas into first gas having a higher content of the acidic gas than the desorption gas and second gas having a lower content of the acidic gas than the desorption gas.

The present invention further provides a recovery method for acidic gas, including:
bringing an adsorbent having adsorbed acidic gas into contact with regeneration gas to desorb the acidic gas from the adsorbent; and
separating desorption gas including the regeneration gas and the acidic gas by a separation membrane into first gas having a higher content of the acidic gas than the desorption gas and second gas having a lower content of the acidic gas than the desorption gas.

### Advantageous Effects of Invention

According to the present invention, it is possible to provide a new recovery system suitable for recovering acidic gas.

### BRIEF DESCRIPTION OF THE DRAWINGS

FIG. 1 is a schematic configuration diagram of a recovery system of Embodiment 1.
FIG. 2 is a perspective view schematically showing an example of an adsorption device.
FIG. 3 is a schematic cross-sectional view showing an example of a membrane separation device.
FIG. 4 is a cross-sectional view schematically showing an example of a separation membrane.
FIG. 5A is a perspective view for describing another example of the adsorption device.
FIG. 5B is a perspective view for describing still another example of the adsorption device.
FIG. 5C is a perspective view for describing still another example of the adsorption device.
FIG. 5D is a schematic cross-sectional view for describing still another example of the adsorption device.
FIG. 6 is a perspective view schematically showing another example of the membrane separation device.
FIG. 7A is a schematic configuration diagram of a recovery system of Embodiment 2
FIG. 7B is a schematic configuration diagram of a recovery system of Embodiment 3.
FIG. 7C is a schematic configuration diagram of a recovery system of Embodiment 4.
FIG. 7D is a schematic configuration diagram of a recovery system of Embodiment 5.
FIG. 7E is a schematic configuration diagram of a recovery system of Embodiment 6.
FIG. 7F is a schematic configuration diagram of a recovery system of Embodiment 7.
FIG. 7G is a schematic configuration diagram of a recovery system of Embodiment 8.
FIG. 7H is a schematic configuration diagram of a recovery system of Embodiment 9.
FIG. 7I is a schematic configuration diagram of a recovery system of Embodiment 10.
FIG. 8 is a schematic configuration diagram for describing a recovery system used in Calculation Example 1.

### DESCRIPTION OF EMBODIMENTS

A recovery system for acidic gas according to a first aspect of the present invention includes:
an adsorption device having an adsorbent that, in a state of having adsorbed acidic gas, comes into contact with regeneration gas to desorb the acidic gas, and configured to release desorption gas including the regeneration gas and the acidic gas; and
a membrane separation device having a separation membrane configured to separate the desorption gas into first gas having a higher content of the acidic gas than the desorption gas and second gas having a lower content of the acidic gas than the desorption gas.

In a second aspect of the present invention, for example, in the recovery system according to the first aspect, the adsorption device has a regeneration zone through which the regeneration gas passes, and, in the regeneration zone, the adsorbent comes into contact with the regeneration gas to desorb the acidic gas.

In a third aspect of the present invention, for example, in the recovery system according to the second aspect, the adsorption device further has an adsorption zone through which the second gas passes, and, in the adsorption zone, the adsorbent comes into contact with the second gas to adsorb the acidic gas included in the second gas.

In a fourth aspect of the present invention, for example, in the recovery system according to the third aspect, the adsorption device has a movement mechanism that moves the adsorbent alternately in the regeneration zone and the adsorption zone.

In a fifth aspect of the present invention, for example, in the recovery system according to any one of the first to fourth aspects, the adsorption device has a first housing portion in which the adsorbent is housed and a second housing portion in which an additional adsorbent is housed.

In a sixth aspect of the present invention, for example, the recovery system according to the fifth aspect further includes a switching mechanism configured to switch between a first operation in which the regeneration gas is sent to the first housing portion and the second gas is sent to the second housing portion and a second operation in which the second gas is sent to the first housing portion and the regeneration gas is sent to the second housing portion.

In a seventh aspect of the present invention, for example, the recovery system according to any one of the first to sixth aspects further includes a desorption gas feed path connected to the adsorption device and the membrane separation device and configured to send the desorption gas from the adsorption device to the membrane separation device.

In an eighth aspect of the present invention, for example, the recovery system according to the seventh aspect further includes a dehumidifier placed on the desorption gas feed path and configured to decrease a content of water in the desorption gas.

In a ninth aspect of the present invention, for example, the recovery system according to the seventh or eighth aspect further includes: a regeneration gas feed path connected to the adsorption device and configured to supply the regeneration gas to the adsorption device; and a recycling path connected to the regeneration gas feed path and the desorption gas feed path and configured to send a part of the desorption gas from the desorption gas feed path to the regeneration gas feed path.

In a tenth aspect of the present invention, for example, the recovery system according to any one of the first to ninth aspects further includes a second gas feed path connected to the adsorption device and the membrane separation device and configured to send the second gas from the membrane separation device to the adsorption device.

In an eleventh aspect of the present invention, for example, the recovery system according to the tenth aspect further includes a heat exchanger placed on the second gas feed path and configured to cool the second gas.

In a twelfth aspect of the present invention, for example, the recovery system according to the tenth or eleventh aspect further includes a raw material gas feed path connected to the second gas feed path and configured to send raw material gas including acidic gas to the second gas feed path.

In a thirteenth aspect of the present invention, for example, in the recovery system according to any one of the first to twelfth aspects, the regeneration gas is combustion gas generated by combustion of a target.

A recovery method for acidic gas according to a fourteenth aspect of the present invention includes:
bringing an adsorbent having adsorbed acidic gas into contact with regeneration gas to desorb the acidic gas from the adsorbent; and
separating desorption gas including the regeneration gas and the acidic gas by a separation membrane into first gas having a higher content of the acidic gas than the desorption gas and second gas having a lower content of the acidic gas than the desorption gas.

In a fifteenth aspect of the present invention, for example, the recovery method according to the fourteenth aspect further includes bringing the second gas into contact with the adsorbent to cause the adsorbent to adsorb the acidic gas included in the second gas.

Hereinafter, the present invention will be described in detail, but the following description is not intended to limit the present invention to specific embodiments.

### <Embodiment 1>

### [Recovery system]

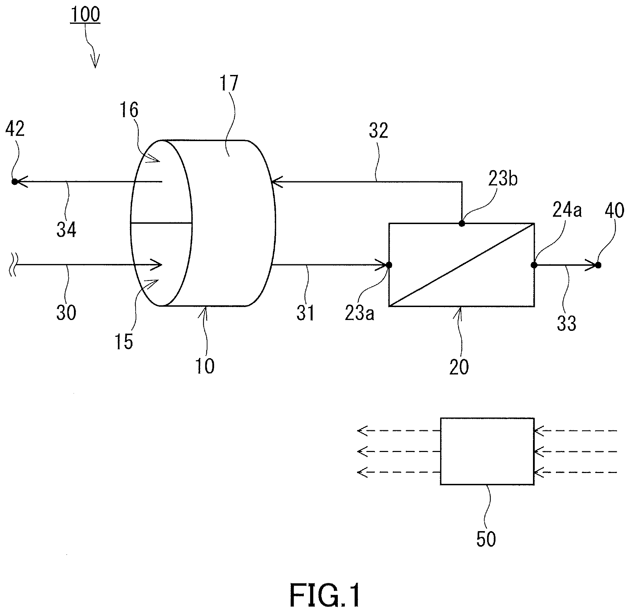

As shown in FIG. 1, an acidic gas recovery system 100 of Embodiment 1 includes an adsorption device 10 having an adsorbent and a membrane separation device 20 having a separation membrane. In the adsorption device 10, in a state of having adsorbed acidic gas, the adsorbent comes into contact with regeneration gas to desorb the acidic gas. By desorbing the acidic gas, the adsorbent is regenerated. The adsorption device 10 releases desorption gas including the regeneration gas and the acidic gas desorbed from the adsorbent.

In the membrane separation device 20, the separation membrane separates the desorption gas into first gas having a higher content of the acidic gas than the desorption gas and second gas having a lower content of the acidic gas than the desorption gas. By recovering the first gas, the acidic gas can be efficiently recovered. When the separation membrane can allow acidic gas to preferentially permeate therethrough, permeated gas that has permeated through the separation membrane corresponds to the first gas, and non-permeated gas that has not permeated through the separation membrane corresponds to the second gas. When the separation membrane can allow gases other than acidic gas to preferentially permeate therethrough, non-permeated gas corresponds to the first gas, and permeated gas corresponds to the second gas.

The adsorption device 10 has, for example, a regeneration zone 15 through which the regeneration gas passes and an adsorption zone 16 through which the second gas passes. Specifically, the adsorption device 10 has a tubular (especially, cylindrical) case 17 in which the adsorbent is housed, and the regeneration zone 15 and the adsorption zone 16 exist inside the case 17. In the regeneration zone 15, the adsorbent comes into contact with the regeneration gas to desorb the acidic gas. The desorption gas including the regeneration gas and the acidic gas is discharged from an outlet of the regeneration zone 15. In the adsorption zone 16, the adsorbent comes into contact with the second gas to adsorb the acidic gas included in the second gas. A third gas having a lower content of the acidic gas than the second gas is discharged from an outlet of the adsorption zone 16. In the adsorption device 10, the adsorbent moves alternately in the regeneration zone 15 and the adsorption zone 16. The adsorption device 10 is typically a rotor-type adsorption device in which the adsorbent moves in the circumferential direction of the cylindrical case 17 as the case 17 rotates.

The recovery system 100 further includes a regeneration gas feed path 30. The regeneration gas feed path 30 is connected to a regeneration gas inlet of the adsorption device 10 (inlet of the regeneration zone 15) and is a path for supplying the regeneration gas to the adsorption device 10. The regeneration gas feed path 30 is connected, for example, to a tank (not shown) or the like in which the regeneration gas is stored. As described later, the regeneration gas is preferably combustion gas generated by combustion of a target. Therefore, the regeneration gas feed path 30 may be directly connected to a regeneration gas (combustion gas) source, or may be configured to continuously supply the regeneration gas from the source to the adsorption device 10.

The recovery system 100 further includes a desorption gas feed path 31. The desorption gas feed path 31 is connected to a desorption gas outlet of the adsorption device 10 (outlet of the regeneration zone 15) and a desorption gas inlet (inlet 23a) of the membrane separation device 20 and is a path for supplying the desorption gas from the adsorption device 10 to the membrane separation device 20.

The recovery system 100 further includes a first gas discharge path 33 and a second gas feed path 32. The first gas discharge path 33 is connected to a first gas outlet of the membrane separation device 20 and is a path for discharging the first gas from the membrane separation device 20. When permeated gas corresponds to the first gas, the first gas discharge path 33 is connected to a permeated gas outlet (outlet 24a) of the membrane separation device 20 (FIG. 1). When non-permeated gas corresponds to the first gas, the first gas discharge path 33 is connected to a non-permeated gas outlet (outlet 23b) of the membrane separation device 20 (not shown). The first gas discharge path 33 has an opening (discharge port 40) for discharging the first gas from the first gas discharge path 33. The first gas can be recovered through the discharge port 40. The first gas discharge path 33 may be connected to a tank (not shown) for recovering the first gas. The recovery system 100 may further include an additional membrane separation device (not shown) for performing membrane separation on the first gas, and the first gas discharge path 33 may be connected to the additional membrane separation device. With the additional membrane separation device, a gas having an even higher content of the acidic gas than the first gas can be obtained.

The second gas feed path 32 is connected to a second gas outlet of the membrane separation device 20 and a second gas inlet of the adsorption device 10 (inlet of the adsorption zone 16) and is a path for supplying the second gas from the membrane separation device 20 to the adsorption device 10. When non-permeated gas corresponds to the second gas, the second gas feed path 32 is connected to the non-permeated gas outlet (outlet 23b) of the membrane separation device 20 (FIG. 1). When permeated gas corresponds to the second gas, the second gas feed path 32 is connected to the permeated gas outlet (outlet 24a) of the membrane separation device 20 (not shown).

The recovery system 100 further includes a third gas discharge path 34. The third gas discharge path 34 is connected to a third gas outlet of the adsorption device 10 (outlet of the adsorption zone 16) and is a path for discharging the third gas from the adsorption device 10. The third gas discharge path 34 has an opening (discharge port 42) for discharging the third gas from the third gas discharge path 34. The third gas is released into the atmospheric air through the discharge port 42, for example.

Each path of the recovery system 100 is composed of, for example, a metal or resin pipe, unless otherwise mentioned.

The recovery system 100 further includes a controller 50 which controls each component of the recovery system 100. The controller 50 is, for example, a DSP (Digital Signal Processor) including an A/D conversion circuit, an input/output circuit, an arithmetic circuit, a storage device, etc. A program for properly operating the recovery system 100 is stored in the controller 50. As an example, the controller 50 adjusts the speed at which the adsorbent moves in the regeneration zone 15 and the adsorption zone 16, by controlling the operation of the adsorption device 10.

The recovery system 100 of the present embodiment is, for example, a continuous-type system. In the present description, the continuous-type system means a system capable of continuously recovering acidic gas without closing the paths included in the recovery system 100 by means of an opening and closing valve or the like. In other words, in the recovery system 100, the desorption gas obtained by the regeneration gas passing through the regeneration zone 15 in the adsorption device 10 is not collected in a tank or the like and can be immediately treated in the membrane separation device 20. Thus, the recovery system 100 of the present embodiment can be operated continuously. The recovery system 100, which serves as a continuous-type system, is suitable for applications in which regeneration gas is continuously supplied.

### [Adsorption device]

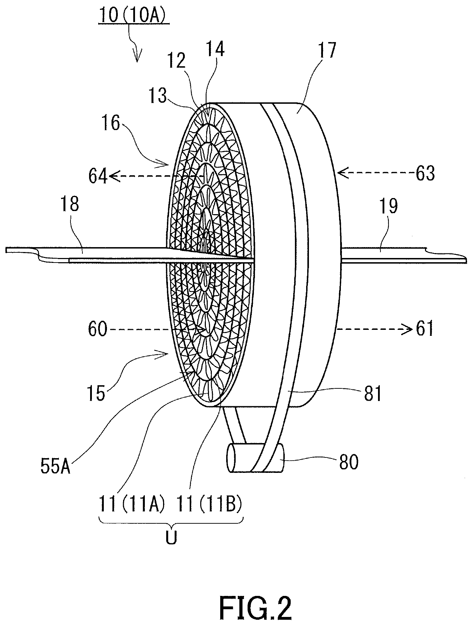

As shown in FIG. 2, the adsorption device 10 (adsorption device 10A) has an adsorbent 11 and the case 17 in which the adsorbent 11 is housed. Specifically, a structure 55A which includes the adsorbent 11 and further has a gas flow path 14 is housed in the case 17. As described above, the case 17 is tubular (especially, cylindrical). The gas flow path 14 extends in the longitudinal direction of the case 17, and serves as a path through which regeneration gas 60 or second gas 63 passes. The structure 55A is typically a honeycomb structure having a plurality of gas flow paths 14 extending in the same direction.

The adsorbent 11 included in the structure 55A typically has a sheet shape. The structure 55A may or may not necessarily include a support supporting the adsorbent 11, together with the adsorbent 11.

The structure 55A includes, for example, an adsorbent unit U in which a corrugated adsorbent 11A and a flat plate-shaped adsorbent 11B are stacked. In the adsorbent 11A, a plurality of hill portions 12 and a plurality of valley portions 13 are alternately aligned. The gas flow path 14 is formed between each hill portion 12 or each valley portion 13 of the adsorbent 11A and the adsorbent 11B. Thus, the gas flow paths 14 are surrounded by the adsorbents 11A and 11B.

The structure 55A has a shape in which one adsorbent unit U is wound on a center tube (not shown). This center tube extends in a direction in which the case 17 extends (the longitudinal direction of the case 17). Specifically, since the adsorbent unit U is wound on the center tube, the plurality of hill portions 12 and the plurality of valley portions 13 are alternately aligned in the circumferential direction of the center tube in the adsorbent 11A.

As described above, the adsorption device 10 has the regeneration zone 15 through which the regeneration gas 60 passes and the adsorption zone 16 through which the second gas 63 passes. Similar to the gas flow paths 14, the regeneration zone 15 and the adsorption zone 16 extend in the longitudinal direction of the case 17. As an example, when the adsorbent unit U wound on the center tube is considered to have a disc shape, both the inlet of the regeneration zone 15 and the outlet of the adsorption zone 16 exist in one main surface of the disc. Both the outlet of the regeneration zone 15 and the inlet of the adsorption zone 16 exist in the other main surface of the disc.

The adsorption device 10 further includes, for example, partitions 18 and 19. The partition 18 is, for example, a plate-shaped member that partitions a space in which the regeneration gas 60 moves and a space in which third gas 64 moves, on the inlet side of the regeneration zone 15. The partition 18 is configured, for example, to prevent mixing of the regeneration gas 60 introduced into the regeneration zone 15 and the third gas 64 discharged from the adsorption zone 16. The partition 19 is, for example, a plate-shaped member that partitions a space in which desorption gas 61 moves and a space in which the second gas 63 moves, on the outlet side of the regeneration zone 15. The partition 19 is configured, for example, to prevent mixing of the desorption gas 61 discharged from the regeneration zone 15 and the second gas 63 introduced into the adsorption zone 16. The adsorption device 10 includes, for example, a tank (not shown) whose interior space is partitioned by the partitions 18 and 19, and the adsorbent 11 and the case 17 are housed in the tank. Each of the partitions 18 and 19 is configured not to interfere with the case 17, for example.

The adsorption device 10 further has a movement mechanism that moves the adsorbent 11 alternately in the regeneration zone 15 and the adsorption zone 16. The movement mechanism includes, for example, the case 17, a rotor 80, and a belt 81. The belt 81 is in contact with each of the case 17 and the rotor 80 and is configured to be able to transmit power generated by the rotor 80 to the case 17. Specifically, by rotating the rotor 80, the power thereof is transmitted to the case 17 via the belt 81. By transmitting the power to the case 17, the case 17 can be rotated. As the case 17 rotates, the adsorbent can move in the circumferential direction of the case 17. For example, as the case 17 rotates, the adsorbent 11 located in the regeneration zone 15 (specifically, a portion of the adsorbent 11 located in the regeneration zone 15) moves in the regeneration zone 15 and reaches the adsorption zone 16. This adsorbent 11 further moves in the adsorption zone 16 and reaches the regeneration zone 15. Thus, by rotating the case 17, the adsorbent 11 can be moved alternately in the regeneration zone 15 and the adsorption zone 16. As an example, during operation of the recovery system 100, the movement mechanism continuously performs rotation operation of the case 17.

In the example of FIG. 2, even when the case 17 rotates, a portion located in the regeneration zone 15 and a portion located in the adsorption zone 16 always exist in the adsorbent unit U. Such a configuration is suitable for the recovery system 100 as a continuous-type system.

### (Adsorbent)

The adsorbent 11 is not limited in particular, as long as the adsorbent 11 can desorb the acidic gas when coming into contact with the regeneration gas and can adsorb the acidic gas included in the second gas when coming into contact with the second gas. The adsorbent 11 is preferably an adsorbent suitable for a temperature swing adsorption method. As an example, the adsorbent 11 can adsorb the acidic gas at about room temperature (25°C) and can receive thermal energy from the regeneration gas to desorb the acidic gas.

The material of the adsorbent 11 is not limited in particular, and examples thereof include inorganic materials and organic materials. Examples of the inorganic materials include metal oxides such as cerium oxide, zeolite, silica gel, activated carbon, and the like. Examples of the organic materials include a polymer P having an amino group, amine compounds other than the polymer P, and the like.

The polymer P is preferably an amine polymer including a constitutional unit U1 derived from an epoxy monomer. This amine polymer includes, for example, a reaction product P1 of a compound group including an amine monomer and an epoxy monomer.

The compound group for forming the reaction product P1 includes an amine monomer and an epoxy monomer as described above. The reaction product P1 may be, for example, a polymer of a monomer group including an amine monomer and an epoxy monomer (especially, a polymer of an amine monomer and an epoxy monomer). The reaction product P1 may be a product (crosslinked product) in which an amine monomer is crosslinked by an epoxy monomer.

Examples of the amine monomer include: aliphatic amines such as ethylamine, ethylenediamine, 1,4-butylenediamine, 1,5-pentanediamine, 1,6-hexanediamine, 1,7-heptanediamine, 1,8-octanediamine, diethylenetriamine, triethylenetetramine, tetraethylenepentamine, pentaethylenehexamine, hexaethyleneheptamine, imino-bis-propylamine, bis(hexamethylene)triamine, 1,3,6-trisaminomethylhexane, tris(2-aminoethyl)amine, N,N'-bis(3-aminopropyl)ethylenediamine, polymethylenediamine, trimethylhexamethylenediamine, and polyetherdiamine; alicyclic amines such as isophoronediamine, menthanediamine, piperazine, N-aminoethylpiperazine, 3,9-bis(3-aminopropyl)-2,4,8,10-tetraoxaspiro(5,5)undecane adduct, bis(4-amino-3-methylcyclohexyl)methane, and bis(4-aminocyclohexyl)methane, and modified products of these; aliphatic polyamines such as polyethyleneimine and polyalkylene polyamine; (meth)acrylic polymers having an amino group such as aminoethylated acrylic polymer; aliphatic polyamideamines formed through reaction between polyamines and a dimer acid; and the like. The amine monomer can be used alone, or two types or more thereof may be used in combination.

Examples of the epoxy monomer include: monofunctional epoxy compounds such as n-butyl glycidyl ether, higher alcohol glycidyl ether, allyl glycidyl ether, 2-ethylhexyl glycidyl ether, phenyl glycidyl ether, cresyl glycidyl ether, p-sec-butylphenyl glycidyl ether, and t-butylphenyl glycidyl ether; diepoxy alkanes such as 1,5-hexadiene diepoxide, 1,7-octadiene diepoxide, and 1,9-decadiene diepoxide; polyfunctional epoxy compounds having an ether group such as (poly)ethylene glycol diglycidyl ether, (poly)propylene glycol diglycidyl ether, 1,4-butanediol diglycidyl ether, neopentyl glycol diglycidyl ether, 1,6-hexanediol diglycidyl ether, trimethylolpropane polyglycidyl ether, and sorbitol polyglycidyl ether; and polyfunctional epoxy compounds having an amino group such as N,N,N',N'-tetraglycidyl-m-xylenediamine and 1,3-bis(N,N-diglycidylaminomethyl)cyclohexane.

The epoxy monomer may be an aromatic epoxy resin, a non-aromatic epoxy resin, or the like, depending on the case. Examples of the aromatic epoxy resin include a polyphenyl-based epoxy resin, an epoxy resin including a fluorene ring, an epoxy resin including triglycidyl isocyanurate, an epoxy resin including a hetero aromatic ring (e.g., triazine ring), and the like. Examples of the polyphenyl-based epoxy resin include bisphenol A type epoxy resin, brominated bisphenol A type epoxy resin, bisphenol F type epoxy resin, bisphenol AD type epoxy resin, stilbene type epoxy resin, biphenyl type epoxy resin, bisphenol A novolak type epoxy resin, cresol novolak type epoxy resin, diaminodiphenylmethane type epoxy resin, tetrakis(hydroxyphenyl)ethane-based epoxy resin, and the like. Examples of the non-aromatic epoxy resin include aliphatic glycidyl ether type epoxy resin, aliphatic glycidyl ester type epoxy resin, alicyclic glycidyl ether type epoxy resin, alicyclic glycidyl amine type epoxy resin, alicyclic glycidyl ester type epoxy resin, and the like.

The epoxy monomer can be used alone, or two types or more thereof may be used in combination. When a monofunctional epoxy compound is used, the monofunctional epoxy compound is preferably used in combination with another epoxy monomer including two or more epoxy groups. The monofunctional epoxy compound can also be utilized as a reactive diluent for adjusting the viscosity of the monomer group for forming the reaction product P1.

As described above, the polymer P as an amine polymer includes the constitutional unit U1 derived from an epoxy monomer. When the polymer P is the reaction product P1, the polymer P further includes a constitutional unit U2 derived from an amine monomer. The content of the constitutional unit U1 in the polymer P, in particular, the reaction product P1, is 20 wt% to 70 wt%, for example. The content of the constitutional unit U2 in the polymer P, in particular, the reaction product P1, is, for example, 30 wt% or more and preferably 50 wt% or more. The upper limit value of the content of the constitutional unit U2 is not limited in particular, and is 80 wt%, for example.

A glass transition temperature Tg of the polymer P is not limited in particular, is, for example, 40°C or less, preferably 30°C or less, more preferably 20°C or less, and further preferably 15°C or less, and may be 10°C or less, may be 5°C or less, or may be 0°C or less. When the glass transition temperature Tg of the polymer P is low to this extent, the speed at which acidic gas is adsorbed by the adsorbent 11 tends to be high. From the viewpoint of sufficiently ensuring the acidic gas adsorption ability of the adsorbent 11 and from the viewpoint of heat resistance, the lower limit value of the glass transition temperature Tg of the polymer P is, for example, -100°C, preferably -50°C, and more preferably -10°C. In the present description, the glass transition temperature Tg means the midpoint glass transition temperature (T_{mg}) obtained according to the standards of JIS K7121:1987. Normally, the polymer P corresponds to a thermosetting resin. The polymer P is solid, for example, at 25°C, preferably in the range of 25°C to 80°C.

The weight average molecular weight of the polymer P is not limited in particular, and is, for example, 500 or more, preferably 1000 or more, more preferably 10000 or more, and further preferably 100000 or more. The upper limit value of the weight average molecular weight of the polymer P is, for example, 10000000.

The adsorbent 11 includes, for example, the polymer P as a main component. In the present description, the "main component" means a component most included on a weight basis in the adsorbent 11. The content of the polymer P in the adsorbent 11 is, for example, 50 wt% or more, preferably 70 wt% or more, and more preferably 90 wt% or more, and may be 95 wt% or more, or may be 99 wt% or more. The adsorbent 11 may be substantially composed of only the polymer P. The higher the content of the polymer P is, the more the acidic gas adsorption ability of the adsorbent 11 tends to be improved.

The adsorbent 11 may be substantially composed of only the polymer P, and may further include another component other than the polymer P. Examples of the other component include a carrier, a reaction accelerator, a plasticizer, a pigment, a dye, an anti-aging agent, a conductive material, an antistatic agent, an ultraviolet absorber, a flame retardant, an antioxidant, and the like.

### [Membrane separation device]

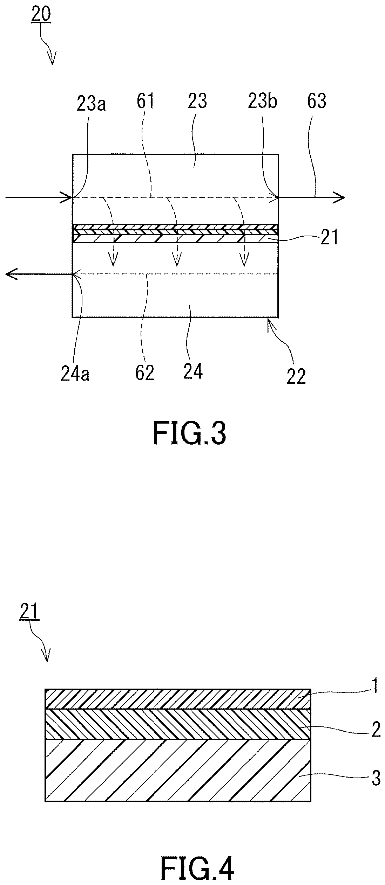

As shown in FIG. 3, the membrane separation device 20 includes a separation membrane 21 and a tank 22. The tank 22 has a first chamber 23 and a second chamber 24. The space in the first chamber 23 corresponds to a feed-side space, and the space in the second chamber 24 corresponds to a permeation-side space. The separation membrane 21 is placed in the tank 22. In the tank 22, the separation membrane 21 separates the first chamber 23 and the second chamber 24 from each other. The separation membrane 21 extends from one of a pair of wall surfaces of the tank 22 to the other.

The first chamber 23 has the inlet 23a and the outlet 23b. The second chamber 24 has the outlet 24a. The inlet 23a of the first chamber 23 is an opening for supplying the desorption gas 61 to the membrane separation device 20. The outlet 24a of the second chamber 24 is an opening for discharging permeated gas (e.g., first gas 62) obtained by the desorption gas 61 permeating through the separation membrane 21, from the membrane separation device 20. The outlet 23b of the first chamber 23 is an opening for discharging non-permeated gas that has not permeated through the separation membrane 21 (e.g., the second gas 63), from the membrane separation device 20. Each of the inlet 23a, the outlet 23b, and the outlet 24a is formed, for example, in a wall surface of the tank 22. The membrane separation device 20 is suitable for a flow-type (continuous-type) membrane separation method. However, the membrane separation device 20 may be used for a batch-type membrane separation method.

### (Separation membrane)

The separation membrane 21 can, for example, allow the acidic gas included in the desorption gas 61 to preferentially permeate therethrough. However, the separation membrane 21 may allow other gases other than the acidic gas included in the desorption gas 61 to preferentially permeate therethrough. Hereinafter, as an example, the separation membrane 21 that can allow the acidic gas, especially carbon dioxide, included in the desorption gas 61 to preferentially permeate therethrough, will be described.

As shown in FIG. 4, the separation membrane 21 includes, for example, a separation functional layer 1. The separation membrane 21 may further include a porous support 3 supporting the separation functional layer 1, and an intermediate layer 2 placed between the separation functional layer 1 and the porous support 3. The intermediate layer 2 is in direct contact with each of the separation functional layer 1 and the porous support 3, for example.

### (Separation functional layer)

The separation functional layer 1 is a layer that allows the acidic gas included in the desorption gas 61 to preferentially permeate therethrough. In a preferred embodiment, the separation functional layer 1 includes a resin. Examples of the resin included in the separation functional layer 1 include a polyether block amide resin, a polyamide resin, a polyether resin, a polyimide resin, a cellulose acetate resin, a silicone resin, and a fluorine resin. The separation functional layer 1 preferably includes a polyether block amide resin. In this embodiment, the separation functional layer 1 is preferably substantially composed of a resin. In the present description, the phrase "substantially composed of ---" means excluding other components that change the essential characteristic of the mentioned material, and means that, for example, 95 wt% or more or even 99 wt% or more is composed of the material.

In another preferred embodiment, the separation functional layer 1 includes an ionic liquid. The ionic liquid is a salt (an ionic compound) that is liquid at 25°C. The separation functional layer 1 has, for example, a double-network gel including an ionic liquid. The double-network gel is a gel including two types of network structures independent from each other. The double-network gel includes, for example, a first network structure composed mainly of an organic material, a second network structure composed mainly of an inorganic material, and an ionic liquid. In the present description, the phrase "composed mainly of" means that 50 wt% or more or even 70 wt% or more is composed of the material. The combination of the first network structure and the second network structure is not limited to the above. As an example, the first network structure may be composed mainly of a first organic material, and the second network structure may be composed mainly of a second organic material.

The organic material for forming the first network structure includes, for example, a polymer such as polyacrylamide (particularly, polydialkylacrylamide such as polydimethylacrylamide). The polymer included in the organic material may have a structural unit derived from an acrylamide derivative and may further include a crosslinked structure. The polymer including a crosslinked structure can be produced by a known method. First, for example, a prepolymer having a structural unit having an N-hydroxysuccinimide ester group is prepared. The structural unit having an N-hydroxysuccinimide ester group is derived from N-acryloxysuccinimide, for example. Next, the prepolymer is allowed to react with an amine-based crosslinking agent to obtain a polymer including a crosslinked structure. The amine-based crosslinking agent is a compound, such as ethylene glycol bis(3-aminopropyl) ether, having two or more primary amino groups.

The second network structure may include a network of a plurality of particles. The network of the plurality of particles is formed by, for example, the plurality of particles being bonded to each other by hydrogen bonds. The particles included in the second network structure may be particles exemplified as nanoparticles described later. In an example, the particles included in the second network structure are silica particles.

In the present embodiment, specific examples of the ionic liquid include an ionic liquid having imidazolium, pyridinium, ammonium, or phosphonium and a substituent having 1 or more carbon atoms, and the like

In an ionic liquid having imidazolium and a substituent having 1 or more carbon atoms, examples of the substituent having 1 or more carbon atoms include an alkyl group having 1 to 20 carbon atoms, a cycloalkyl group having 3 to 14 carbon atoms, an aryl group having 6 to 20 carbon atoms, and the like, and these may be each further substituted by a hydroxy group, a cyano group, an amino group, a monovalent ether group, or the like (for example, a hydroxyalkyl group having 1 to 20 carbon atoms, or the like).

Examples of the alkyl group having 1 to 20 carbon atoms include a methyl group, an ethyl group, an n-propyl group, an n-butyl group, an n-pentyl group, an n-hexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group, an n-eicosadecyl group, an i-propyl group, a sec-butyl group, an i-butyl group, a 1-methylbutyl group, a 1-ethylpropyl group, a 2-methylbutyl group, an i-pentyl group, a neopentyl group, a 1,2-dimethylpropyl group, a 1,1-dimethylpropyl group, a t-pentyl group, a 2-ethylhexyl group, a 1,5-dimethylhexyl group, and the like. These may be each further substituted by a hydroxy group, a cyano group, an amino group, a monovalent ether group, or the like.

The above alkyl group may be substituted by a cycloalkyl group. The number of carbon atoms in the alkyl group substituted by the cycloalkyl group is, for example, 1 or more and 20 or less. Examples of the alkyl group substituted by the cycloalkyl group include a cyclopropyl methyl group, a cyclobutyl methyl group, a cyclohexyl methyl group, a cyclohexyl propyl group, and the like. These may be each further substituted by a hydroxy group, a cyano group, an amino group, a monovalent ether group, or the like.

Examples of the cycloalkyl group having 3 to 14 carbon atoms include a cyclopropyl group, a cyclobutyl group, a cyclopentyl group, a cyclohexyl group, a cycloheptyl group, a cyclooctyl group, a cyclododecyl group, a norbornyl group, a bornyl group, an adamantyl group, and the like, and these may be each further substituted by a hydroxy group, a cyano group, an amino group, a monovalent ether group, or the like.

Examples of the aryl group having 6 to 20 carbon atoms include a phenyl group, a toluyl group, a xylyl group, a mesityl group, an anisyl group, a naphthyl group, a benzyl group, and the like, and these may be each further substituted by a hydroxy group, a cyano group, an amino group, a monovalent ether group, or the like.

A compound having imidazolium and a substituent having 1 or more carbon atoms may further have a substituent such as an alkyl group, and may form a salt with a counter anion. Examples of the counter anion include alkyl sulfate, tosylate, methanesulfonate, acetate, bis(fluorosulfonyl)imide, bis(trifluoromethanesulfonyl)imide, thiocyanate, dicyanamide, tricyanomethanide, tetracyanoborate, hexafluorophosphate, tetrafluoroborate, halide, and the like. From the viewpoint of gas separation performance, bis(fluorosulfonyl)imide, bis(trifluoromethanesulfonyl)imide, dicyanamide, tricyanomethanide, and tetracyanoborate are preferable.

Specific examples of the ionic liquid having imidazolium and a substituent having 1 or more carbon atoms include 1-ethyl-3-methylimidazolium bis(fluorosulfonyl)imide, 1-ethyl-3-methylimidazolium dicyanamide, 1-butyl-3-methylimidazolium bromide, 1-butyl-3-methylimidazolium chloride, 1-butyl-3-methylimidazolium tetrafluoroborate, 1-butyl-3-methylimidazolium hexafluorophosphate, 1-butyl-3-methylimidazolium trifluoromethanesulfonate, 1-butyl-3-methylimidazolium tetrachloroferrate, 1-butyl-3-methylimidazolium iodide, 1-butyl-2,3-dimethylimidazolium chloride, 1-butyl-2,3-dimethylimidazolium hexafluorophosphate, 1-butyl-2,3-dimethylimidazolium tetrafluoroborate, 1-butyl-3-methylimidazolium bis(trifluoromethanesulfonyl)imide, 1-butyl-2,3-dimethylimidazolium bis(trifluoromethanesulfonyl)imide, 1-butyl-3-methylimidazolium trifluoro(trifluoromethyl)borate, 1-butyl-3-methylimidazolium tribromide, 1,3-dimesitylimidazolium chloride, 1,3-bis(2,6-diisopropylphenyl)imidazolium chloride, 1,3-diisopropylimidazolium tetrafluoroborate, 1,3-di-tert-butylimidazolium tetrafluoroborate, 1,3-dicyclohexylimidazolium tetrafluoroborate, 1,3-dicyclohexylimidazolium chloride, 1,2-dimethyl-3-propylimidazolium iodide, 1-hexyl-3-methylimidazolium chloride, 1-hexyl-3-methylimidazolium hexafluorophosphate, 1-hexyl-3-methylimidazolium tetrafluoroborate, 1-hexyl-3-methylimidazolium bromide, 1-methyl-3-propylimidazolium iodide, 1-methyl-3-n-octylimidazolium bromide, 1-methyl-3-n-octylimidazolium chloride, 1-methyl-3-n-octylimidazolium hexafluorophosphate, 1-methyl-3-[6-(methylsulfinyl)hexyl] imidazolium p-toluenesulfonate, 1-ethyl-3-methylimidazolium tricyanomethanide, 1-ethyl-3-methylimidazolium tetracyanoborate, 1-(2-hydroxyethyl)-3-methylimidazolium bis(trifluoromethanesulfonyl)imide, and the like.

Among these, from the viewpoint of gas separation performance, 1-ethyl-3-methylimidazolium bis(fluorosulfonyl)imide ([EMI][FSI]), 1-ethyl-3-methylimidazolium dicyanamide ([EMI][DCA]), 1-ethyl-3-methylimidazolium tricyanomethanide ([EMI][TCM]), 1-ethyl-3-methylimidazolium tetracyanoborate ([EMI][TCB]), 1-butyl-3-methylimidazolium bis(trifluoromethanesulfonyl)imide ([C₄mim][TF₂N]), and 1-(2-hydroxyethyl)-3-methylimidazolium bis(trifluoromethanesulfonyl)imide ([C₂OHim][TF₂N]) are particularly preferable.

The method for producing the double-network gel is not limited in particular, and the method disclosed in E. Kamio et al., Adv.Mater, 29, 1704118 (2017) can be used, for example.

The content of the ionic liquid in the double-network gel is, for example, 50 wt% or more, preferably 60 wt% or more, more preferably 70 wt% or more, and further preferably 80 wt% or more. The higher the content of the ionic liquid is, the more preferentially the separation functional layer 1 allows the carbon dioxide included in the desorption gas 61 to permeate therethrough. The upper limit value of the content of the ionic liquid is not limited in particular, and is 95 wt%, for example.

The content of the first network structure, in the double-network gel, composed mainly of an organic material is, for example, 1 wt% or more, preferably 5 wt% or more, and more preferably 10 wt% or more. The upper limit value of the content of the first network structure is, for example, 15 wt%. The content of the second network structure, in the double-network gel, composed mainly of an inorganic material is, for example, 1 wt% or more from the viewpoint of improving the strength of the double-network gel. The upper limit value of the content of the second network structure is, for example, 5 wt%. The ratio of the total value of the weight of the first network structure and the weight of the second network structure to the weight of the double-network gel is, for example, 2 wt% or more, preferably 5 wt% or more, and more preferably 10 wt% or more. This ratio is preferably 20 wt% or less. In this embodiment, the separation functional layer 1 is preferably substantially composed of the double-network gel.

The thickness of the separation functional layer 1 is, for example, 50 µm or less, preferably 25 µm or less, and more preferably 15 µm or less. Depending on the case, the thickness of the separation functional layer 1 may be 10 µm or less, 5.0 µm or less, or 2.0 µm or less. The thickness of the separation functional layer 1 may be 0.05 µm or more, or 0.1 µm or more.

### (Intermediate layer)

The intermediate layer 2 includes a resin, for example, and may further include nanoparticles dispersed in the resin (matrix). The nanoparticles may be separated from each other or partially aggregate in the matrix. The material of the matrix is not limited in particular, and examples thereof include: silicone resins such as polydimethylsiloxane; fluorine resins such as polytetrafluoroethylene; epoxy resins such as polyethylene oxide; polyimide resins; polysulfone resins; polyacetylene resins such as polytrimethylsilylpropyne and polydiphenylacetylene; and polyolefin resins such as polymethylpentene. The matrix preferably includes a silicone resin.

The nanoparticles may include an inorganic material or an organic material. Examples of the inorganic material included in the nanoparticles include silica, titania, and alumina. Preferably, the nanoparticles include silica.

The thickness of the intermediate layer 2 is not limited in particular, and is, for example, less than 50 µm, preferably 40 µm or less, and more preferably 30 µm or less. The lower limit value of the thickness of the intermediate layer 2 is not limited in particular, and is 1 µm, for example. The intermediate layer 2 is, for example, a layer having a thickness of less than 50 µm.

### (Porous support)

The porous support 3 supports the separation functional layer 1 via the intermediate layer 2. Examples of the porous support 3 include: a nonwoven fabric; porous polytetrafluoroethylene; aromatic polyamide fiber; a porous metal; a sintered metal; porous ceramic; porous polyester; porous nylon; activated carbon fiber; latex; silicone; silicone rubber; a permeable (porous) polymer including at least one selected from the group consisting of polyvinyl fluoride, polyvinylidene fluoride, polyurethane, polypropylene, polyethylene, polystyrene, polycarbonate, polysulfone, polyether ether ketone, polyacrylonitrile, polyimide, and polyphenylene oxide; a metallic foam having an open cell or a closed cell; a polymer foam having an open cell or a closed cell; silica; a porous glass; a mesh screen; and the like. The porous support 3 may be a combination of two or more of these materials.

The porous support 3 has an average pore diameter of 0.01 to 0.4 µm, for example. The thickness of the porous support 3 is not limited in particular, and is, for example, 10 µm or more, preferably 20 µm or more, and more preferably 50 µm or more. The thickness of the porous support 3 is, for example, 300 µm or less, preferably 200 µm or less, and more preferably 150 µm or less.

### (Shape of separation membrane)

In the present embodiment, the separation membrane 21 is typically a flat membrane. However, the separation membrane 21 may have a shape other than a flat membrane, and may be, for example, a hollow fiber membrane. As an example, the separation membrane 21 as a hollow fiber membrane may include the separation functional layer 1 and the porous support 3, but does not have to include the intermediate layer 2. When the separation membrane 21 is a hollow fiber membrane, there is a tendency that the membrane area is easily increased.

### [Recovery method for acidic gas]

In the present embodiment, the recovery method for acidic gas includes: bringing the adsorbent 11 having adsorbed acidic gas into contact with the regeneration gas 60 to desorb the acidic gas from the adsorbent 11 (regeneration step); and separating the desorption gas 61 including the regeneration gas and the acidic gas by the separation membrane 21 into the first gas 62 having a higher content of the acidic gas than the desorption gas 61 and the second gas 63 having a lower content of the acidic gas than the desorption gas 61 (separation step).

The regeneration step is carried out, for example, as follows. First, the regeneration gas 60 is supplied to the regeneration zone 15 of the adsorption device 10 through the regeneration gas feed path 30. The adsorbent 11 having adsorbed the acidic gas is located in the regeneration zone 15. Examples of the acidic gas adsorbed by the adsorbent 11 include carbon dioxide, hydrogen sulfide, carbonyl sulfide, sulfur oxide (SOx), hydrogen cyanide, nitrogen oxide (NOx), and the like, and the acidic gas is preferably carbon dioxide.

The regeneration gas 60 includes, for example, acidic gas, and preferably further includes another gas other than acidic gas. The acidic gas included in the regeneration gas 60 is, for example, the same as the acidic gas adsorbed by the adsorbent 11. Examples of the other gas include nonpolar gases such as hydrogen and nitrogen, inert gases such as helium, and water vapor, and the other gas is preferably nitrogen. The regeneration gas 60 is preferably combustion gas generated by combustion of a target. Examples of the target include fuels including hydrocarbon compounds such as methane and propane, biomass fuels, waste, and the like. A specific example of the regeneration gas 60 is off-gas from a chemical plant or thermal power generation.

The content of the acidic gas in the regeneration gas 60 is not limited in particular, is, for example, 0.1 vol% or more, and may be 1.0 vol% or more, 5.0 vol% or more, or even 10 vol% or more. The upper limit value of the content of the acidic gas in the regeneration gas 60 is not limited in particular, is, for example, 50 vol%, and may be 20 vol%. In the present description, unless otherwise specified, the content of the gas means a value in a standard state (0°C, 101 kPa).

The temperature of the regeneration gas 60 introduced into the regeneration zone 15 is not limited in particular as long as thermal energy can be given to the adsorbent 11, and the temperature of the regeneration gas 60 is, for example, 50°C or higher, and may be 60°C or higher, 70°C or higher, or even 80°C or higher. The upper limit value of the temperature of the regeneration gas 60 is, for example, 150°C and may be 100°C from the viewpoint of suppressing the deterioration of the adsorbent 11. The flow rate of the regeneration gas 60 introduced into the regeneration zone 15 is not limited in particular, and is 0.1 to 1000 m³/h. The pressure of the regeneration gas 60 is typically equal to an atmospheric pressure in the use environment of the recovery system 100.

The regeneration gas 60 supplied to the adsorption device 10 passes through the regeneration zone 15, specifically, the gas flow paths 14 located in the regeneration zone 15. The regeneration gas 60 comes into contact with the adsorbent 11 (11A and 11B) while moving through the gas flow paths 14. The adsorbent 11 that has come into contact with the regeneration gas 60 receives thermal energy from the regeneration gas 60 and desorbs the acidic gas. Accordingly, the regeneration gas 60 and the acidic gas desorbed from the adsorbent 11 are mixed to form the desorption gas 61. The desorption gas 61 is discharged from the outlet of the regeneration zone 15 and supplied to the membrane separation device 20 through the desorption gas feed path 31.

The desorption gas 61 has a lower temperature and a higher content of the acidic gas than the regeneration gas 60. The temperature of the desorption gas 61 is a value lower than that of the regeneration gas 60, for example, by 10°C or more and preferably 30°C or more. The temperature of the desorption gas 61 is, for example, 10°C to 60°C. The content of the acidic gas in the desorption gas 61 is a value higher than that of the regeneration gas 60, for example, by 0.1 vol% or more and preferably 1 vol% or more. The content of the acidic gas in the desorption gas 61 is, for example, 0.1 vol% to 50 vol%.

The separation step is carried out, for example, as follows. First, the desorption gas 61 is supplied to the first chamber 23 (feed-side space) of the membrane separation device 20 through the desorption gas feed path 31. By the supply of the desorption gas 61, the pressure in the first chamber 23 may be increased. The pressure of the desorption gas 61 supplied to the first chamber 23 is, for example, 0.1 MPa or more. Furthermore, the pressure in the second chamber 24 may be reduced while the desorption gas 61 is supplied to the first chamber 23. The recovery system 100 may further include a pump (not shown) for reducing the pressure in the second chamber 24. The second chamber 24 may be depressurized such that the pressure of the space in the second chamber 24 is lower than an atmospheric pressure in the surrounding environment, for example, by 10 kPa or more, preferably 50 kPa or more, and more preferably 100 kPa or more.

The desorption gas 61 supplied to the first chamber 23 is separated into the first gas 62 and the second gas 63 by the separation membrane 21. Hereinafter, as an example, the case where permeated gas corresponds to the first gas 62 and non-permeated gas corresponds to the second gas 63 will be described. The first gas 62 as the permeated gas is supplied to the second chamber 24. The first gas 62 supplied to the second chamber 24 is discharged to the outside of the membrane separation device 20 through the outlet 24a. The first gas 62 is discharged from the discharge port 40 through the first gas discharge path 33.

As described above, the first gas 62 has a higher content of the acidic gas than the desorption gas 61. The content of the acidic gas in the first gas 62 is not limited in particular, and is 20 to 99 vol%, for example. The ratio of the content (vol%) of the acidic gas in the first gas 62 to the content (vol%) of the acidic gas in the desorption gas 61 is not limited in particular, and is 2 to 9, for example.

The content of the acidic gas in the desorption gas 61 gradually decreases from the inlet 23a to the outlet 23b of the first chamber 23. The content of the acidic gas in the desorption gas 61 (the second gas 63 as the non-permeated gas) treated in the first chamber 23 is not limited in particular, and is 0.1 to 10 vol%, for example. The second gas 63 is discharged to the outside of the membrane separation device 20 through the outlet 23b.

The recovery method of the present embodiment further includes, for example, bringing the second gas 63 into contact with the adsorbent 11 to cause the adsorbent 11 to adsorb the acidic gas included in the second gas 63 (adsorption step). The adsorption step is carried out, for example, as follows. First, the second gas 63 is supplied from the membrane separation device 20 through the second gas feed path 32 to the adsorption zone 16 of the adsorption device 10. The temperature of the second gas 63 supplied to the adsorption zone 16 is, for example, 50°C or lower, and is preferably 40°C or lower, or even 30°C or lower. The adsorbent 11 from which the acidic gas has been desorbed in the regeneration zone 15 is located in the adsorption zone 16. The adsorbent 11 located in the adsorption zone 16 has been moved from the regeneration zone 15 to the adsorption zone 16 by the movement mechanism of the adsorption device 10. When the adsorption device 10 is the above-described rotor-type adsorption device, the rotation speed of the case 17 when the recovery method is being carried out can be adjusted as appropriate according to the size of the case 17, the characteristics of the adsorbent 11, etc., and is 0.5 rph to 10 rph, for example.

The second gas 63 supplied to the adsorption device 10 passes through the adsorption zone 16, specifically, the gas flow paths 14 located in the adsorption zone 16. The second gas 63 comes into contact with the adsorbent 11 (11A and 11B) while moving through the gas flow paths 14. The adsorbent 11 that has come into contact with the second gas 63 adsorbs the acidic gas included in the second gas 63. The second gas 63 (third gas 64) treated in the adsorption zone 16 is discharged from the outlet of the adsorption zone 16. The third gas 64 is discharged from the discharge port 42 through the third gas discharge path 34.

The third gas 64 has a lower content of the acidic gas than the second gas 63. The content of the acidic gas in the third gas 64 is a value lower than that of the second gas 63, for example, by 0.1 vol% or more and preferably 1 vol% or more. The content of the acidic gas in the third gas 64 is, for example, 0.1 to 5 vol%.

In the recovery system 100 of the present embodiment, the acidic gas can be desorbed from the adsorbent 11 in the adsorption device 10 to regenerate the adsorbent 11, and the first gas 62 in which the acidic gas is concentrated can be obtained in the membrane separation device 20. Furthermore, the acidic gas that could not be recovered as the first gas 62 can be supplied as the second gas 63 to the adsorption device 10 to be adsorbed by the adsorbent 11. Thus, the recovery system 100 can efficiently recover acidic gas by the combination of the adsorption device 10 and the membrane separation device 20 and is suitable for recovering acidic gas. In particular, as described later, the recovery system 100 can more efficiently recover acidic gas by using combustion gas as the regeneration gas 60.

Conventionally, when recovering acidic gas from combustion gas by the adsorption method, the following operations are required. First, the temperature of the combustion gas is decreased to about room temperature by a heat exchanger or the like. Next, the combustion gas at about room temperature is brought into contact with an adsorbent to cause the adsorbent to adsorb the acidic gas included in the combustion gas. The acidic gas is desorbed from the adsorbent by treating the adsorbent with high-temperature regeneration gas different from the combustion gas. Accordingly, desorption gas including the acidic gas and the regeneration gas is recovered. As described above, the conventional adsorption method requires an operation to cool the combustion gas and an operation to separately prepare the regeneration gas. In the conventional adsorption method, if a large amount of the regeneration gas is used to sufficiently desorb the acidic gas from the adsorbent, it also tends to be difficult to adjust the content of the acidic gas in the desorption gas to a value sufficient for practical use.

The separation membrane used in the membrane separation method tends to deteriorate due to heat when coming into contact with high-temperature combustion gas, resulting in a decrease in the separation performance thereof. Therefore, when recovering acidic gas from combustion gas by the membrane separation method, an operation to cool the combustion gas in advance is also required. Furthermore, the membrane separation method also tends to have a lower acidic gas recovery rate than the adsorption method.

In contrast to these methods, in the recovery system 100 of the present embodiment, when combustion gas is used as the regeneration gas 60, the thermal energy of the combustion gas is used for the regeneration process of the adsorbent 11, so that there is no need to cool the combustion gas in advance. Furthermore, since the thermal energy is used for the regeneration process, the desorption gas 61 discharged from the adsorption device 10 has a lower temperature than the regeneration gas 60. Therefore, the desorption gas 61 can also be supplied to the membrane separation device 20 without being cooled in advance. Since the desorption gas 61 has a higher content of the acidic gas than the combustion gas (regeneration gas 60), it also tends to be possible to easily increase the content of the acidic gas in the first gas 62 in the membrane separation device 20. Thus, in the recovery system 100, acidic gas can be more efficiently recovered by using combustion gas as the regeneration gas 60.

### [Modification 1 of adsorption device]

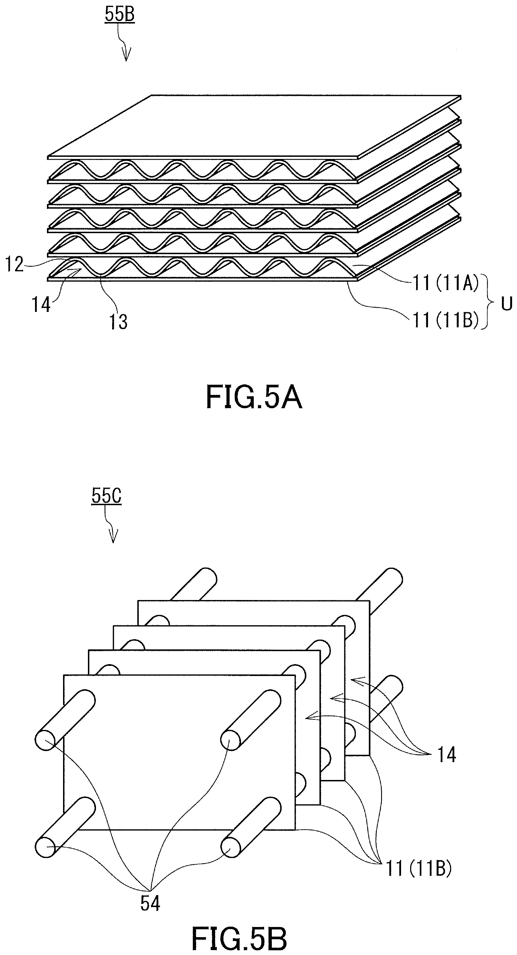

In the recovery system 100, the shape of the structure 55A included in the adsorption device 10 is not limited to that shown in FIG. 2. For example, a structure 55B shown in FIG. 5A has a shape in which a plurality of adsorbent units U each having two adsorbents 11A and 11B are stacked. Except for this, the configuration of the structure 55B is the same as that of the structure 55A. For the sake of description, the case 17 is not shown in FIG. 5A.

The number of adsorbent units U in the structure 55B is not limited in particular, and is 2 to 100, for example. In the structure 55B, the plurality of adsorbent units U are stacked such that a plurality of adsorbents 11A and a plurality of adsorbents 11B are alternately aligned. When the plurality of adsorbent units U are stacked, the structure 55B has a block shape.

### [Modification 2 of adsorption device]

In the recovery system 100, the structure included in the adsorption device 10 does not have to be a honeycomb structure such as the above structures 55A and 55B. A structure 55C shown in FIG. 5B includes only an adsorbent 11B having a flat plate shape as the adsorbent 11. Specifically, the structure 55C includes a plurality of adsorbents 11B, and the plurality of adsorbents 11B are aligned with voids therebetween. The void between two adsorbents 11B serves as a gas flow path 14. For the sake of description, the case 17 is not shown in FIG. 5B.

The structure 55C may further include a fixing member 54 which fixes the plurality of adsorbents 11B in order to ensure the above-described gas flow paths 14. The fixing member 54 is, for example, a rod. As an example, a through hole is formed in each of the plurality of adsorbents 11B so as to penetrate the adsorbent 11B in the thickness direction thereof, and the plurality of adsorbents 11B are fixed by inserting the rod as the fixing member 54 into the through hole of each adsorbent 11B. The rod as the fixing member 54 may be a bolt having an external thread formed on a side surface thereof. In this case, the gas flow path 14 can be more reliably ensured by screwing a nut onto the bolt at a position between two adsorbents 11B. In this example, the nut serves as a spacer.

In the example of FIG. 5B, the plurality of adsorbents 11B each have a rectangular shape in a plan view, and have through holes formed near four corners thereof. Furthermore, the structure 55C includes four fixing members 54, and the four fixing members 54 are inserted into the four through holes formed at the four corners of each adsorbent 11B, respectively. However, the number and the positions of through holes formed in each adsorbent 11B and the number of fixing members 54 are not limited to the example of FIG. 5B.

### [Modification 3 of adsorption device]

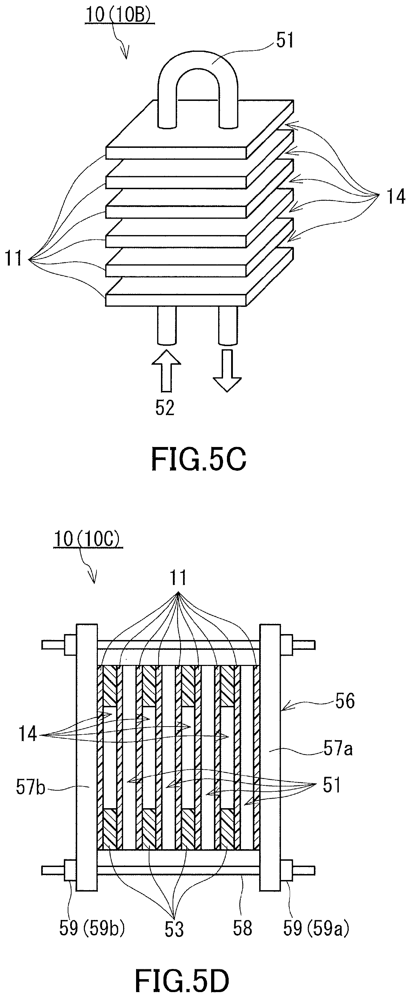

The adsorption device 10 included in the recovery system 100 does not have to be the rotor-type adsorption device shown in FIGS. 1 and 2. An adsorption device 10B shown in FIG. 5C includes an adsorbent 11 and a medium path 51. In the adsorption device 10B, a heat medium 52 for heating the adsorbent 11 may pass through the medium path 51, or a cooling medium for cooling the adsorbent 11 may pass through the medium path 51.

The adsorbent 11 included in the adsorption device 10B typically has a sheet shape. The adsorption device 10B may or may not necessarily include a support supporting the adsorbent 11, together with the adsorbent 11.

The adsorption device 10B includes, for example, a plurality of adsorbents 11. The plurality of adsorbents 11 may be aligned with voids therebetween, and the void between two adsorbents 11 may serve as a gas flow path 14. In the adsorption device 10B, the configurations of the adsorbents 11 and the gas flow paths 14 may be the same as those described for the structures 55A to 55C.

In the adsorption device 10B, the medium path 51 is composed of, for example, a pipe made of a metal such as copper, specifically, a heat transfer tube. In the adsorption device 10B, the medium path 51 penetrates each adsorbent 11 in the thickness direction of the adsorbent 11, for example. Specifically, in the adsorbents 11, through holes are formed so as to penetrate the adsorbents 11 in the thickness direction thereof, and the medium path 51 is inserted into the through holes of the adsorbents 11. The adsorption device 10B typically has a structure similar to that of a fin tube heat exchanger including heat transfer fins and a heat transfer tube penetrating the heat transfer fins.

The medium path 51 may have a U-shape, and may be inserted into two through holes formed in each adsorbent 11. The number of through holes formed in each adsorbent 11 and the number of medium paths 51 are not limited to those shown in FIG. 5C. For example, four or more through holes may be formed in each adsorbent 11, and two or more medium paths 51 each having a U-shape may be inserted into the through holes of each adsorbent 11.

The adsorption device 10B further includes a casing (not shown) in which the adsorbents 11 and the medium path 51 are housed. The casing has, for example, a regeneration gas inlet for sending regeneration gas into the interior of the casing. The casing may further have, for example, a desorption gas outlet for discharging desorption gas from the adsorbents 11 to the outside of the casing. Furthermore, the casing may have a medium inlet for sending the heat medium 52 or the cooling medium to the medium path 51 and a medium outlet for discharging the heat medium 52 or the cooling medium from the medium path 51.

### [Modification 4 of adsorption device]

In an adsorption device 10C shown in FIG. 5D, a medium path 51 is formed between two adsorbents 11. Specifically, in the adsorption device 10C, among a plurality of voids formed between a plurality of adsorbents 11, some voids serve as medium paths 51, and the remaining voids serve as gas flow paths 14. The medium paths 51 and the gas flow paths 14 are alternately aligned along the arrangement direction in which the plurality of adsorbents 11 are arranged. The adsorption device 10C typically has a structure similar to that of a plate heat exchanger in which a plurality of heat transfer plates are stacked.

The adsorption device 10C preferably includes a support supporting each adsorbent 11, together with the adsorbents 11. In the adsorption device 10C, for example, each adsorbent 11 faces the gas flow path 14, and each support faces the medium path 51. In the adsorption device 10C, a spacer 53 is disposed in each gas flow path 14, and a spacer (not shown) is also disposed in each medium path 51. These spacers are configured to ensure the gas flow paths 14 and the medium paths 51, introduce an appropriate fluid into each path, and also prevent the fluid from leaking into other paths. In FIG. 5D, each gas flow path 14 may be connected to the external space of the adsorption device 10C on the far side and the near side of the drawing sheet thereof, thereby allowing regeneration gas to be taken into the gas flow path 14 from the external space.

The adsorption device 10C further includes a restraining member 56 which restrains the plurality of adsorbents 11. The restraining member 56 has, for example, a pair of plate members 57a and 57b, a rod 58, and fixing members 59. The plate members 57a and 57b are aligned in the arrangement direction of the plurality of adsorbents 11, and sandwich the plurality of adsorbents 11. With the plate members 57a and 57b, pressure can be applied to the plurality of adsorbents 11 in the arrangement direction thereof. In the plate members 57a and 57b, the regeneration gas outlet, the medium inlet, the medium outlet, and the like which are described above for the adsorption device 10C may be formed.

Through holes are formed in the plate members 57a and 57b, respectively, and the rod 58 is inserted into the through holes of the plate members 57a and 57b. The rod 58 may be a bolt having an external thread formed on a side surface thereof. Each fixing member 59 fixes, for example, one plate member out of the plate members 57a and 57b and the rod 58 to each other. The fixing member 59 is typically a nut having an internal thread that can be screwed with the rod 58. The restraining member 56 has a fixing member 59a which fixes the plate member 57a and the rod 58 to each other, and a fixing member 59b which fixes the plate member 57b and the rod 58 to each other.

In the example of FIG. 5D, two rods 58 are fixed by the fixing members 59, respectively. However, the number of rods 58, etc., are not limited to the example of FIG. 5D.

### [Modification of membrane separation device]

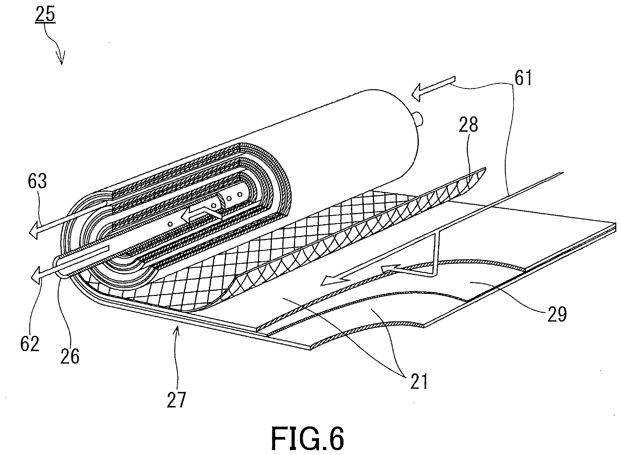

In the recovery system 100, the membrane separation device 20 may be a spiral membrane element, a hollow fiber membrane element, or the like. FIG. 6 shows a spiral membrane element. A membrane separation device 25 in FIG. 6 includes a center tube 26 and a laminate 27. The laminate 27 includes the separation membrane 21.

The center tube 26 has a cylindrical shape. The center tube 26 has a plurality of holes or slits formed on the surface thereof so as to allow permeated gas to flow into the center tube 26. Examples of the material of the center tube 26 include: resins such as acrylonitrile-butadiene-styrene copolymer resin (ABS resin), polyphenylene ether resin (PPE resin), and polysulfone resin (PSF resin); and metals such as stainless steel and titanium. The inner diameter of the center tube 26 is, for example, in the range of 20 to 100 mm.

The laminate 27 further includes a feed-side flow path member 28 and a permeation-side flow path member 29 in addition to the separation membrane 21. The laminate 27 is wound around the center tube 26. The membrane separation device 25 may further include an exterior member (not shown).

As the feed-side flow path member 28 and the permeation-side flow path member 29, for example, a resin net, woven fabric, or knitted fabric composed of polyethylene, polypropylene, polyethylene terephthalate (PET), polyphenylene sulfide (PPS), or an ethylene-chlorotrifluoroethylene copolymer (ECTFE) can be used.

Membrane separation using the membrane separation device 25 is performed by the following method, for example. First, the desorption gas 61 is supplied to one end of the wound laminate 27. Accordingly, permeated gas (e.g., the first gas 62) having permeated through the separation membrane 21 of the laminate 27 moves into the center tube 26. The permeated gas is discharged to the outside through the center tube 26. Non-permeated gas (e.g., the second gas 63) not having permeated through the separation membrane 21 is discharged to the outside through the other end of the wound laminate 27.

### <Embodiment 2>

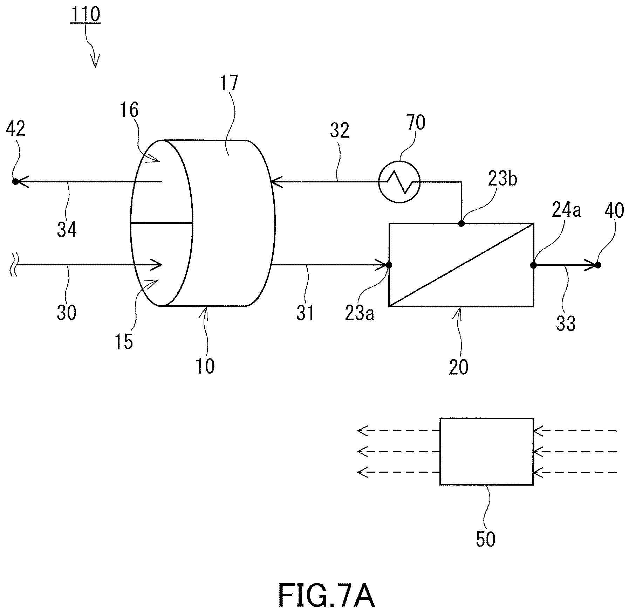

As shown in FIG. 7A, in a recovery system 110 of Embodiment 2, a heat exchanger 70 for cooling second gas 63 is placed on a second gas feed path 32. Except for the above, the configuration of the recovery system 110 is the same as that of the recovery system 100 of Embodiment 1. Therefore, elements that are common to the recovery system 100 of Embodiment 1 and the recovery system 110 of the present embodiment are designated by the same reference characters, and the description thereof is sometimes omitted. That is, the following descriptions of each embodiment may be applied to each other as long as there is no technical inconsistency. Furthermore, each embodiment may be combined with each other as long as there is no technical inconsistency.

As described above, the heat exchanger 70 cools the second gas 63 discharged from the membrane separation device 20. The heat exchanger 70 is, for example, a gas-liquid heat exchanger that causes heat exchange between a cooling medium such as an antifreeze and the second gas 63, and is typically a fin tube heat exchanger. A heat pump or cooling tower including the heat exchanger 70 may be placed on the second gas feed path 32.

With the heat exchanger 70, the temperature of the second gas 63 supplied to the adsorption device 10 can be sufficiently decreased. Since the sufficiently low temperature second gas 63 is supplied to the adsorption zone 16, the adsorbent 11 can easily adsorb the acidic gas included in the second gas 63.

### <Embodiment 3>

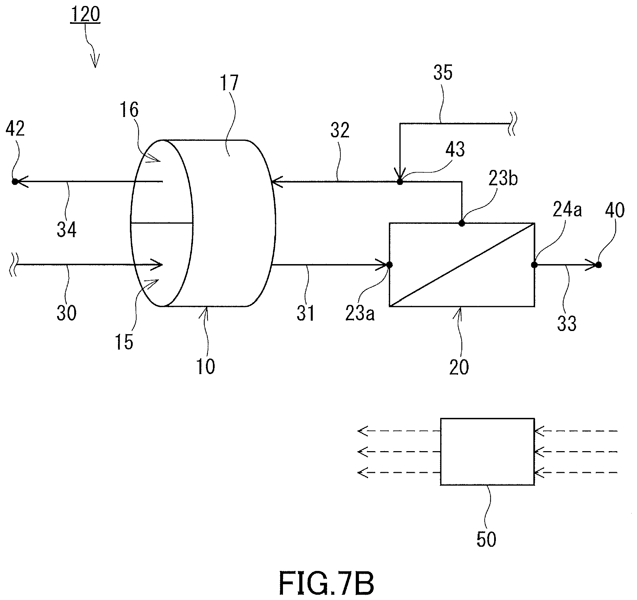

As shown in FIG. 7B, a recovery system 120 of Embodiment 3 further includes a raw material gas feed path 35. Except for the above, the configuration of the recovery system 120 is the same as that of the recovery system 100 of Embodiment 1.

The raw material gas feed path 35 is connected to the second gas feed path 32 at a connection position 43 and is a path for sending raw material gas including acidic gas to the second gas feed path 32. The raw material gas feed path 35 is connected, for example, to a tank (not shown) in which the raw material gas is stored. As described later, the raw material gas is preferably atmospheric air. Therefore, the raw material gas feed path 35 may have an intake port (not shown) open to atmospheric air, and may be configured to continuously supply the atmospheric air from the intake port to the second gas feed path 32.

The raw material gas includes, for example, acidic gas, and preferably further includes another gas other than acidic gas. The acidic gas included in the raw material gas is, for example, the same as the acidic gas included in the second gas 63. The raw material gas is preferably atmospheric air. The raw material gas may be combustion gas or the like. By sending the raw material gas to the second gas feed path 32, the amount of the acidic gas supplied to the adsorption device 10 is increased. Accordingly, the adsorbent 11 located in the adsorption zone 16 can adsorb a sufficient amount of the acidic gas.

The content of the acidic gas in the raw material gas is not limited in particular, is, for example, 0.01 vol% (100 vol ppm) or more and preferably 0.04 vol% (400 vol ppm) or more, and may be 0.1 vol% or more. The upper limit value of the content of the acidic gas in the raw material gas is not limited in particular, and is 20 vol%, for example. The pressure of the raw material gas is typically equal to an atmospheric pressure in the use environment of the recovery system 100.

The temperature of the raw material gas is preferably lower than that of the second gas 63 sent from the membrane separation device 20 to the connection position 43. By mixing the low temperature raw material gas and the second gas 63 at the connection position 43, the temperature of the second gas 63 can be easily decreased. The temperature of the raw material gas is, for example, about room temperature (25°C).

### <Embodiment 4>

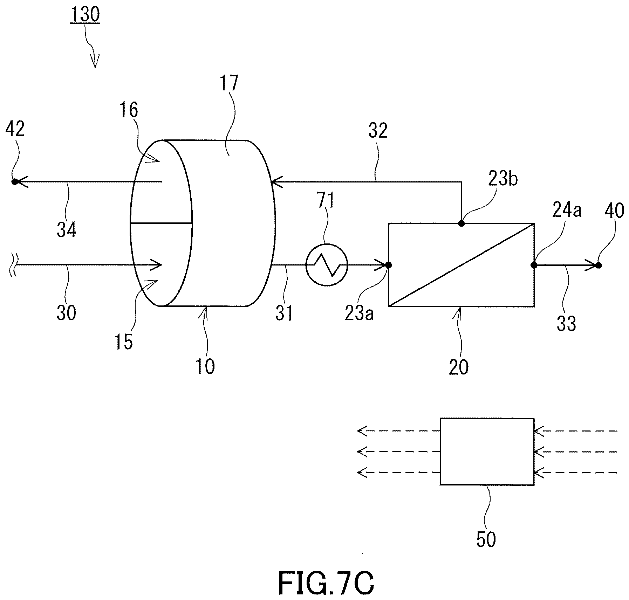

As shown in FIG. 7C, in a recovery system 130 of Embodiment 4, a heat exchanger 71 for cooling desorption gas 61 is placed on a desorption gas feed path 31. Except for the above, the configuration of the recovery system 130 is the same as that of the recovery system 100 of Embodiment 1.

As described above, the heat exchanger 71 cools the desorption gas 61 discharged from the adsorption device 10. The heat exchanger 71 is, for example, a gas-liquid heat exchanger that causes heat exchange between a cooling medium such as an antifreeze and the desorption gas 61, and is typically a fin tube heat exchanger. A heat pump or cooling tower including the heat exchanger 71 may be placed on the desorption gas feed path 31.

With the heat exchanger 71, the temperature of the desorption gas 61 supplied to the membrane separation device 20 can be decreased more. Accordingly, the deterioration of the separation membrane 21 due to heat can be suppressed more.

### <Embodiment 5>

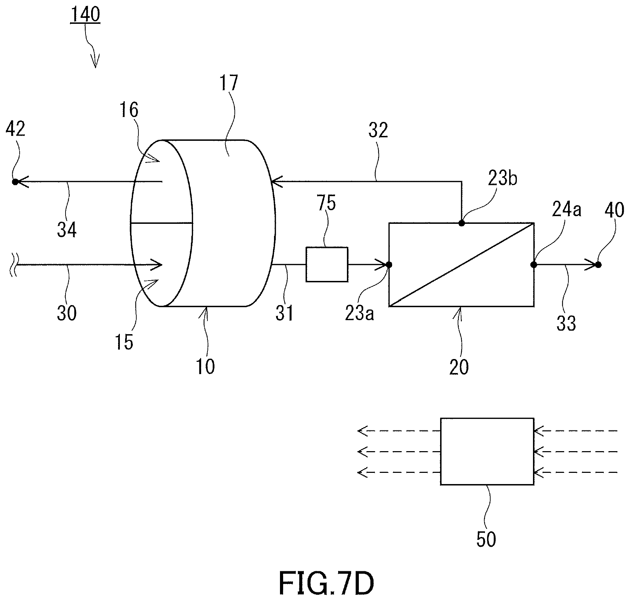

As shown in FIG. 7D, in a recovery system 140 of Embodiment 5, a dehumidifier 75 for decreasing the content of water in desorption gas 61 is placed on a desorption gas feed path 31. Except for the above, the configuration of the recovery system 140 is the same as that of the recovery system 100 of Embodiment 1.

As described above, the dehumidifier 75 decreases the content of water in the desorption gas 61 discharged from the adsorption device 10. The dehumidifier 75 may be of a compressor type, a desiccant type, or a membrane type.

With the dehumidifier 75, the content of water in the desorption gas 61 can be sufficiently decreased, and, for example, the vapor pressure thereof can be adjusted to be equal to or lower than the saturated vapor pressure. Accordingly, generation of condensation on the surface of the separation membrane 21 can be suppressed, so that a decrease in the separation performance of the separation membrane 21 due to condensation can be suppressed. As an example, the humidity of the desorption gas 61 is preferably adjusted to about 50% RH by the dehumidifier 75. The desorption gas 61 having such a humidity is suitable for suppressing a decrease in the separation performance of the separation membrane 21. The dehumidifier 75 may be placed on the regeneration gas feed path 30.

### <Embodiment 6>

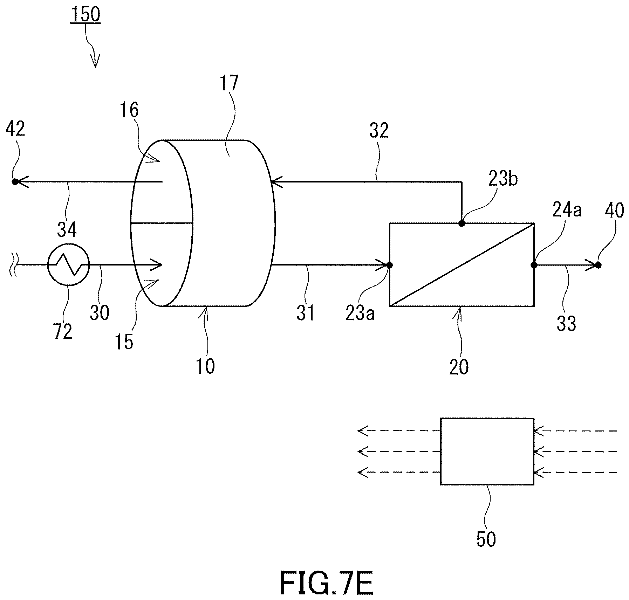

As shown in FIG. 7E, in a recovery system 150 of Embodiment 6, a heat exchanger 72 is placed on a regeneration gas feed path 30. Except for the above, the configuration of the recovery system 150 is the same as that of the recovery system 100 of Embodiment 1.

The heat exchanger 72 appropriately adjusts the temperature of the regeneration gas 60 by cooling or heating the regeneration gas 60 supplied to the adsorption device 10. The heat exchanger 72 is, for example, a gas-liquid heat exchanger that causes heat exchange between a cooling medium such as an antifreeze or a heat medium such as hot water and the regeneration gas 60, and is typically a fin tube heat exchanger. A heat pump or cooling tower including the heat exchanger 72 may be placed on the regeneration gas feed path 30.

With the heat exchanger 72, the temperature of the regeneration gas 60 supplied to the adsorption device 10 can be appropriately adjusted. Accordingly, acidic gas can be sufficiently desorbed from the adsorbent 11, and the deterioration of the adsorbent 11 due to heat can be suppressed. When combustion gas is used as the regeneration gas 60, the temperature of the regeneration gas 60 is, for example, 150°C or higher and particularly about 200°C in some cases. When the regeneration gas 60 having such a high temperature is cooled by the heat exchanger 72, the thermal energy received by the heat medium of the heat exchanger 72 can be used for other purposes (e.g., keeping water heated by a boiler warm).

### <Embodiment 7>

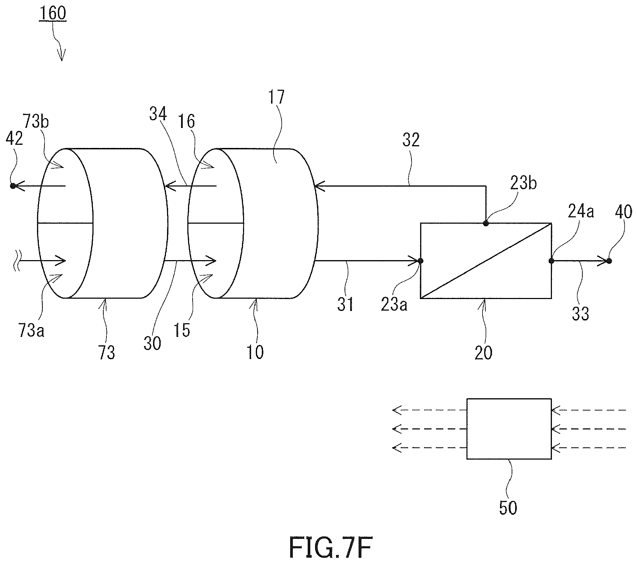

As shown in FIG. 7F, in a recovery system 160 of Embodiment 7, a rotary heat exchanger 73 is placed on a regeneration gas feed path 30. Except for the above, the configuration of the recovery system 160 is the same as that of the recovery system 100 of Embodiment 1.

The rotary heat exchanger 73 has, for example, a first zone 73a which is located in the regeneration gas feed path 30 and through which the regeneration gas 60 passes, and a second zone 73b which is located in the third gas discharge path 34 and through which the third gas 64 passes. Specifically, the rotary heat exchanger 73 has a heat exchange member and a tubular (especially, cylindrical) case in which the heat exchange member is housed, and the first zone 73a and the second zone 73b exist inside the case. In the rotary heat exchanger 73, the heat exchange member moves alternately in the first zone 73a and the second zone 73b as the tubular case rotates. The rotation speed of the case can be adjusted as appropriate according to the size of the case, the characteristics of the heat exchange member, etc., and is 0.5 rph to 10 rph, for example.

As an example, in the first zone 73a, the heat exchange member comes into contact with the regeneration gas 60 and receives thermal energy from the regeneration gas 60. Accordingly, the temperature of the regeneration gas 60 can be decreased. Furthermore, in the second zone 73b, the heat exchange member comes into contact with the third gas 64 and gives thermal energy to the third gas 64. Accordingly, the heat exchange member is cooled. With the recovery system 160 including the rotary heat exchanger 73, acidic gas can be more efficiently recovered, for example, by using combustion gas as the regeneration gas 60.

The heat exchange member of the rotary heat exchanger 73 is typically a honeycomb structure made of a metal such as aluminum.

### <Embodiment 8>

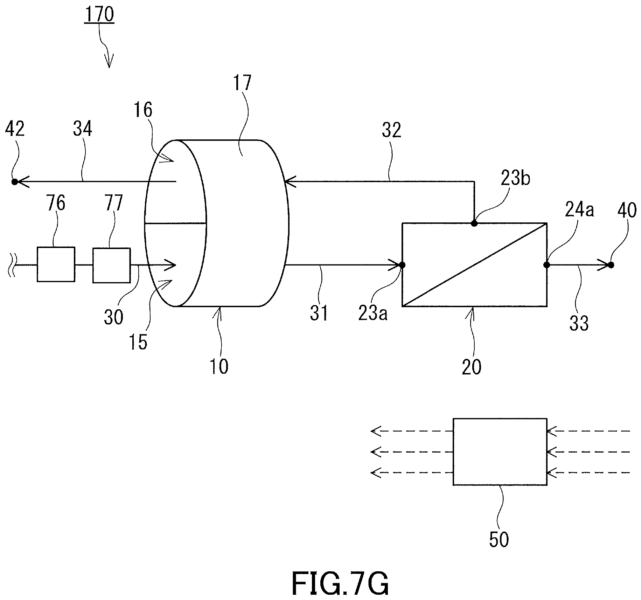

As shown in FIG. 7G, in a recovery system 170 of Embodiment 8, an impurity treatment device 76 and a corrosive substance treatment device 77 are placed on a regeneration gas feed path 30. Except for the above, the configuration of the recovery system 170 is the same as that of the recovery system 100 of Embodiment 1.

When combustion gas is used as the regeneration gas 60, the regeneration gas 60 may include: solid impurities such as soot and exhaust particulates; corrosive substances such as sulfur-based gases, chlorine-based gases, and nitrogen oxide-based gases; and the like. The impurity treatment device 76 is a device that removes solid impurities from the regeneration gas 60, and examples thereof include a washing type dust collector, a filtering type dust collector, an electric dust collector, and the like. Examples of the corrosive substance treatment device 77 include a wet recovery device, a dry recovery device, a catalyst device in which a catalyst for removing corrosive substances from the regeneration gas 60 is housed, and the like.

With the impurity treatment device 76 and the corrosive substance treatment device 77, solid impurities and corrosive substances can be removed from the regeneration gas 60. Accordingly, the deterioration of the adsorption performance of the adsorbent 11 due to contact of solid impurities and corrosive substances with the adsorbent 11 can be suppressed.

### <Embodiment 9>

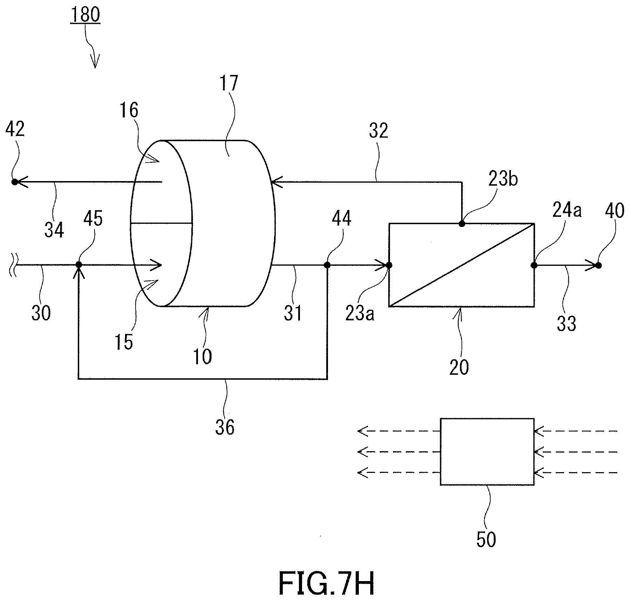

As shown in FIG. 7H, a recovery system 180 of Embodiment 9 further includes a recycling path 36. Except for the above, the configuration of the recovery system 180 is the same as that of the recovery system 100 of Embodiment 1.

The recycling path 36 is connected to the regeneration gas feed path 30 and the desorption gas feed path 31 and is a path for sending a part of the desorption gas 61 from the desorption gas feed path 31 to the regeneration gas feed path 30. Specifically, the recycling path 36 branches from the desorption gas feed path 31 at a branch position 44 and merges with the regeneration gas feed path 30 at a merging position 45.

With the recycling path 36, a part of the desorption gas 61 can be sent to the regeneration gas feed path 30. The desorption gas 61 is mixed with the regeneration gas 60 in the regeneration gas feed path 30. Accordingly, the content of the acidic gas in the regeneration gas 60 increases. The regeneration gas 60 in which the content of the acidic gas has been increased is sent to the adsorption device 10, whereby the content of the acidic gas in the desorption gas 61 discharged from the adsorption device 10 also increases. Thus, with the recycling path 36, the content of the acidic gas in the desorption gas 61 can be sufficiently increased before the desorption gas 61 is sent to the membrane separation device 20. Accordingly, in the membrane separation device 20, the content of the acidic gas in the first gas 62 can be easily increased. The recycling path 36 is also suitable for suppressing a change in the composition of the desorption gas 61 over time.

### <Embodiment 10>

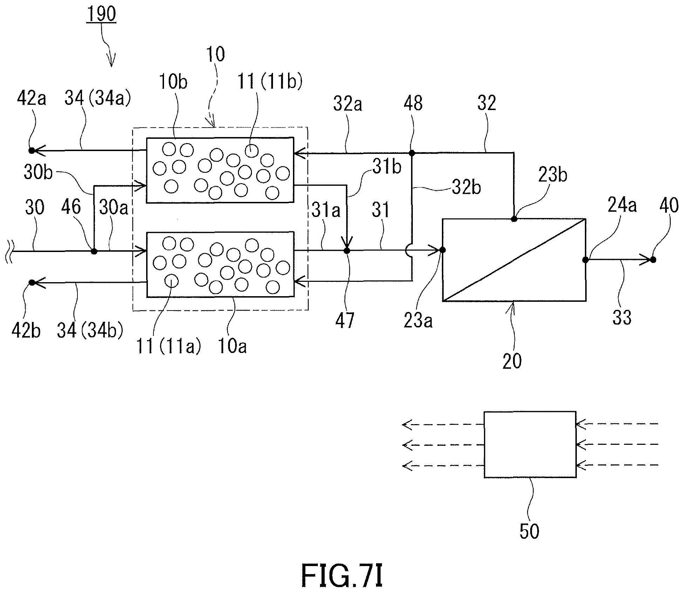

As shown in FIG. 7I, in a recovery system 190 of Embodiment 10, an adsorption device 10 has a first housing portion 10a in which an adsorbent 11a is housed, and a second housing portion 10b in which an additional adsorbent 11b is housed. Each of a regeneration gas feed path 30, a desorption gas feed path 31, and a second gas feed path 32 has a portion connected to the first housing portion 10a and a portion connected to the second housing portion 10b. The recovery system 190 includes two third gas discharge paths 34a and 34b. Except for the above, the configuration of the recovery system 190 is the same as that of the recovery system 100 of Embodiment 1.

The first housing portion 10a is, for example, a tank in which the adsorbent 11a is housed. The shape of the adsorbent 11a is not limited in particular, and is, for example, a block shape, a sheet shape, a filter shape, a particulate shape, or the like. In the present description, the particulate shape includes a spherical shape, an ellipsoid shape, a flake shape, a fiber shape, and the like. The second housing portion 10b is, for example, a tank in which the additional adsorbent 11bB is housed. The composition and the shape of the additional adsorbent 11b may be the same as or different from those of the adsorbent 11a.

The regeneration gas feed path 30 has a first portion 30a and a second portion 30b. The first portion 30a is connected to a regeneration gas inlet of the first housing portion 10a and is a path for supplying regeneration gas to the first housing portion 10a. The second portion 30b branches from the first portion 30a at a branch position 46 and is connected to a regeneration gas inlet of the second housing portion 10b. The second portion 30b is a path for supplying the regeneration gas to the second housing portion 10b. A valve (not shown) for adjusting the flow rate of the regeneration gas sent to the first housing portion 10a and the second housing portion 10b may be placed at the branch position 46. Specific examples of the valve are an opening and closing valve and a flow rate adjusting valve.

The desorption gas feed path 31 has a first portion 31a and a second portion 31b. The first portion 31a is connected to a desorption gas outlet of the first housing portion 10a and is a path for supplying desorption gas from the first housing portion 10a to the membrane separation device 20. The second portion 31b is connected to a desorption gas outlet of the second housing portion 10b and merges with the first portion 31a at a merging position 47. The second portion 31b is a path for supplying the desorption gas from the second housing portion 10b to the first portion 31a. A valve (not shown) for adjusting the flow rate of the desorption gas discharged from the first housing portion 10a and the second housing portion 10b may be placed at the merging position 47. Specific examples of the valve are an opening and closing valve and a flow rate adjusting valve.

The second gas feed path 32 has a first portion 32a and a second portion 32b. The first portion 32a is connected to a second gas inlet of the second housing portion 10b and is a path for supplying second gas from the membrane separation device 20 to the second housing portion 10b. The second portion 32b branches from the first portion 32a at a branch position 48 and is connected to a second gas inlet of the first housing portion 10a. The second portion 32b is a path for supplying the second gas to the first housing portion 10a. A valve (not shown) for adjusting the flow rate of the second gas sent to the first housing portion 10a and the second housing portion 10b may be placed at the branch position 48. Specific examples of the valve are an opening and closing valve and a flow rate adjusting valve.

A third gas discharge path 34a is connected to a third gas outlet of the second housing portion 10b and is a path for discharging third gas from the second housing portion 10b. The third gas discharge path 34a has an opening (discharge port 42a) for discharging the third gas from the third gas discharge path 34a. A third gas discharge path 34b is connected to a third gas outlet of the first housing portion 10a and is a path for discharging the third gas from the first housing portion 10a. The third gas discharge path 34b has an opening (discharge port 42b) for discharging the third gas from the third gas discharge path 34b. The third gas discharge path 34b may merge with the third gas discharge path 34a.

The recovery system 190 further includes a switching mechanism that switches between a first operation in which the regeneration gas is sent to the first housing portion 10a and the second gas is sent to the second housing portion 10b and a second operation in which the second gas is sent to the first housing portion 10a and the regeneration gas is sent to the second housing portion 10b. The switching mechanism includes, for example, valves placed at the branch position 46, the merging position 47, and the branch position 48, respectively, and a controller 50. The first operation and the second operation can be switched by controlling each valve by the controller 50 and switching the path along which the gas moves.

A recovery method for acidic gas using the recovery system 190 can be performed, for example, by the following method. First, the first operation in which the regeneration gas is sent to the first housing portion 10a and the second gas is sent to the second housing portion 10b, is performed. Specifically, the valve placed at the branch position 46 and the valve placed at the merging position 47 are controlled to supply the regeneration gas only to the first housing portion 10a out of the first housing portion 10a and the second housing portion 10b. Furthermore, the valve placed at the branch position 48 is controlled to supply the second gas only to the second housing portion 10b out of the first housing portion 10a and the second housing portion 10b.

In the first operation, the regeneration gas is supplied to the first housing portion 10a through the first portion 30a of the regeneration gas feed path 30. Accordingly, the above regeneration step is carried out in the first housing portion 10a. The desorption gas discharged from the first housing portion 10a is supplied to the first chamber 23 (feed-side space) of the membrane separation device 20 through the desorption gas feed path 31. Accordingly, the above separation step is carried out in the membrane separation device 20. Furthermore, the second gas discharged from the membrane separation device 20 is supplied to the second housing portion 10b through the first portion 32a of the second gas feed path 32. Accordingly, the above adsorption step is carried out in the second housing portion 10b. The third gas discharged from the second housing portion 10b is discharged from the discharge port 42a through the third gas discharge path 34a.

The time of the first operation is not limited in particular, and is 0.5 to 24 hours, for example. The first operation is performed, for example, until the adsorbent 11a housed in the first housing portion 10a is fully regenerated.

Next, the second operation in which the second gas is sent to the first housing portion 10a and the regeneration gas is sent to the second housing portion 10b, is performed. Specifically, the valve placed at the branch position 46 and the valve placed at the merging position 47 are controlled to supply the regeneration gas only to the second housing portion 10b out of the first housing portion 10a and the second housing portion 10b. Furthermore, the valve placed at the branch position 48 is controlled to supply the second gas only to the first housing portion 10a out of the first housing portion 10a and the second housing portion 10b.

In the second operation, the regeneration gas is supplied to the second housing portion 10b through the second portion 30b of the regeneration gas feed path 30. Accordingly, the above regeneration step is carried out in the second housing portion 10b. The desorption gas discharged from the second housing portion 10b is supplied to the first chamber 23 (feed-side space) of the membrane separation device 20 through the desorption gas feed path 31. Accordingly, the above separation step is carried out in the membrane separation device 20. Furthermore, the second gas discharged from the membrane separation device 20 is supplied to the first housing portion 10a through the second portion 32b of the second gas feed path 32. Accordingly, the above adsorption step is carried out in the first housing portion 10a. The third gas discharged from the first housing portion 10a is discharged from the discharge port 42b through the third gas discharge path 34b.

The time of the second operation is not limited in particular, and is 0.5 to 24 hours, for example. The second operation is performed, for example, until the adsorbent 11b housed in the second housing portion 10b is sufficiently regenerated.

The recovery system 190 is suitable for a batch-type operation method. However, in the recovery system 190, acidic gas can be continuously recovered by alternately repeating the first operation and the second operation described above. The recovery system 190 has an advantage that adsorbents having various shapes such as a particulate shape are easily used as the adsorbents 11a and 11b.

Depending on the case, the structure 55A described with reference to FIG. 2, the structure 55B described with reference to FIG. 5A, or the structure 55C described with reference to FIG. 5B may be housed in the first housing portion 10a of the recovery system 190. Similarly, the structure 55A, the structure 55B, or the structure 55C may be housed in the second housing portion 10b.

Furthermore, the adsorption device 10B described with reference to FIG. 5C or the adsorption device 10C described with reference to FIG. 5D can be used as the first housing portion 10a. Similarly, the adsorption device 10B or the adsorption device 10C can be used as the second housing portion 10b.

As an example, each of the first housing portion 10a and the second housing portion 10b may be the adsorption device 10B. In this case, the temperature of the adsorbent 11 can be appropriately adjusted by passing a heat medium or a cooling medium through the medium path 51 of each adsorption device 10B. As an example, if the temperature of the regeneration gas is excessively high, shortening of the life of the adsorbent 11 due to the excessively high temperature can be prevented by passing a cooling medium through the medium path 51 of the adsorption device 10B, to which the regeneration gas is sent, to cool the adsorbent 11. Also, the influence of the heat generated when the acidic gas included in the second gas is adsorbed by the adsorbent 11 can be reduced by passing a cooling medium through the medium path 51 of the adsorption device 10B, to which the second gas is sent, to cool the adsorbent 11.

### [Examples]

In the following, the present invention will be described in further detail using Examples. However, the present invention is not limited thereto.

### (Calculation Example 1)

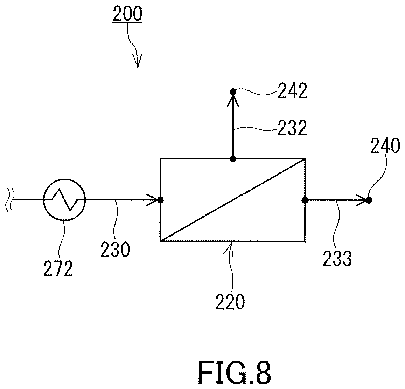

The operation of a recovery system 200 shown in FIG. 8 was simulated using Symmetry, process modeling software, created by Schlumberger Limited. The recovery system 200 has the same configuration as the recovery system 150 (FIG. 7E) of Embodiment 6, except that the adsorption device 10 is not included. Specifically, the recovery system 200 includes a membrane separation device 220, a combustion gas feed path 230, a first gas discharge path 233, and a second gas discharge path 232.

The membrane separation device 220 has a separation membrane, and separates combustion gas into first gas having a higher content of acidic gas than the combustion gas and second gas having a lower content of the acidic gas than the combustion gas, by the separation membrane.

The combustion gas feed path 230 is a path for supplying the combustion gas to the membrane separation device 220. A heat exchanger 272 for cooling the combustion gas is placed on the combustion gas feed path 230.

The first gas discharge path 233 is connected to a first gas outlet of the membrane separation device 220 and is a path for discharging the first gas from the membrane separation device 220. The first gas discharge path 233 has a discharge port 240 for discharging the first gas from the first gas discharge path 233. The second gas discharge path 232 is connected to a second gas outlet of the membrane separation device 220 and is a path for discharging the second gas from the membrane separation device 220. The second gas discharge path 232 has a discharge port 242 for discharging the second gas from the second gas discharge path 232.

In Calculation Example 1, for the separation membrane included in the membrane separation device 220, the permeation rate of carbon dioxide was set to 100 GPU, the permeation rate of nitrogen was set to 2.5 GPU, and the membrane area was set to 350 m². GPU means10⁻⁶ cm³ (STP)/(sec·cm²·cmHg), and cm³ (STP) means the volume of gas at 1 atm and 0°C.

The above permeation rates were assumed to be values identified by the following test method.

Test: An operation of supplying mixed gas including carbon dioxide and nitrogen to a space adjacent to one surface of the separation membrane and depressurizing a space adjacent to the other surface of the separation membrane (separation operation) is performed. A permeation rate is identified based on the results of the separation operation. In the separation operation, the content of carbon dioxide in the mixed gas is 50 vol% in a standard state (0°C, 101 kPa), the mixed gas supplied to the space adjacent to the one surface has a temperature of 30°C and a pressure of 0.1 MPa, and the space adjacent to the other surface is depressurized such that the pressure in this space is lower than an atmospheric pressure in the measurement environment by 0.1 MPa.

In Calculation Example 1, the combustion gas supplying conditions and the pressure in the permeation-side space of the membrane separation device 220 during operation were set as follows. In the present description, the volume ratio is a value in a standard state (0°C, 101 kPa).

### [Combustion gas supplying conditions]

Flow rate: 100.0 Sm³/h
Composition (volume ratio): CO₂/N₂ = 9/91
Pressure: 0.1013 MPa
Temperature: 80°C

### [Permeation-side space]

Pressure: 0.001 MPa

Furthermore, in Calculation Example 1, the energy consumption efficiency (COP: Coefficient of Performance) of the heat exchanger 272 was set to 1, and it was assumed to cool the combustion gas to 50°C by the heat exchanger 272.

According to the simulation of Calculation Example 1, the first gas (permeated gas) had a flow rate of 7.8 Sm³/h, a CO₂/N₂ volume ratio of 70/30, and a temperature of 50°C. The second gas (non-permeated gas) had a flow rate of 92.2 S m³/h, a CO₂/N₂ volume ratio of 4/96, and a temperature of 50°C. From these results, it can be seen that in Calculation Example 1, carbon dioxide can be recovered at a recovery rate of 61% by recovering the first gas. Furthermore, in Calculation Example 1, the power consumption of the heat exchanger 272 was 1.06 kW

### (Calculation Example 2)

The operation of the recovery system 110 (FIG. 7A) of Embodiment 2 was simulated using Symmetry, process modeling software, created by Schlumberger Limited. In Calculation Example 2, the combustion gas (regeneration gas) supplying conditions, the pressure in the permeation-side space of the membrane separation device 20 during operation, the characteristics of the separation membrane included in the membrane separation device 20, and the COP of the heat exchanger 70 were assumed to be the same as in Calculation Example 1. The amount of heat consumed by the adsorption device 10 in the desorption step (regeneration step) was assumed to come from the endothermic reaction when the adsorbent desorbs carbon dioxide. It was also assumed that this amount of heat corresponds to the power consumption of the heat exchanger 272 obtained in Calculation Example 1. The adsorbent included in the adsorption device 10 was assumed to have a heat of adsorption of 80 kJ/mol when 1 mol of carbon dioxide is adsorbed. An example of an adsorbent that exhibits a heat of adsorption of about 80 kJ/mol is polyethyleneimine. In Calculation Example 2, it was assumed to cool the second gas to 30°C by the heat exchanger 70.

According to the simulation of Calculation Example 2, the desorption gas from the adsorption device 10 had a flow rate of 101.1 Sm³/h, a CO₂/N₂ volume ratio of 10/90, and a temperature of 50°C. The first gas (permeated gas) had a flow rate of 8.5 Sm³/h, a CO₂/N₂ volume ratio of 72/28, and a temperature of 50°C. The second gas (non-permeated gas) had a flow rate of 92.6 Sm³/h, a CO₂/N₂ volume ratio of 4/96, and a temperature of 50°C. As described above, the second gas was cooled from a temperature of 50°C to 30°C by the heat exchanger 70. The third gas discharged from the adsorption device 10 had a flow rate of 91.5 Sm³/h, a CO₂/N₂ volume ratio of 3/97, and a temperature of 63°C.

From the above results, it can be seen that in Calculation Example 2, carbon dioxide can be recovered at a recovery rate of 68% by recovering the first gas. Furthermore, in Calculation Example 2, the power consumption of the heat exchanger 70 was 0.46 kW In Calculation Example 2, the power consumption for rotating the case 17 of the adsorption device 10 was a negligibly small value compared to the power consumption of the heat exchanger 70.

From the results of Calculation Examples 1 and 2, it can be seen that the recovery system of the present embodiment, in which the adsorption device and the membrane separation device are combined, can recover acidic gas at a higher recovery rate while consuming less power than when using only a membrane separation device. Thus, the recovery system of the present embodiment is suitable for efficiently recovering acidic gas.

### INDUSTRIAL APPLICABILITY

The recovery system of the present embodiment is suitable for recovering acidic gas, especially, carbon dioxide.

## Claims

1. A recovery system for acidic gas, comprising:
an adsorption device having an adsorbent that, in a state of having adsorbed acidic gas, comes into contact with regeneration gas to desorb the acidic gas, and configured to release desorption gas including the regeneration gas and the acidic gas; and
a membrane separation device having a separation membrane configured to separate the desorption gas into first gas having a higher content of the acidic gas than the desorption gas and second gas having a lower content of the acidic gas than the desorption gas.

2. The recovery system according to claim 1, wherein
the adsorption device has a regeneration zone through which the regeneration gas passes, and
in the regeneration zone, the adsorbent comes into contact with the regeneration gas to desorb the acidic gas.

3. The recovery system according to claim 2, wherein
the adsorption device further has an adsorption zone through which the second gas passes, and
in the adsorption zone, the adsorbent comes into contact with the second gas to adsorb the acidic gas included in the second gas.

4. The recovery system according to claim 3, wherein the adsorption device has a movement mechanism that moves the adsorbent alternately in the regeneration zone and the adsorption zone.

5. The recovery system according to claim 1, wherein the adsorption device has a first housing portion in which the adsorbent is housed and a second housing portion in which an additional adsorbent is housed.

6. The recovery system according to claim 5, further comprising a switching mechanism configured to switch between a first operation in which the regeneration gas is sent to the first housing portion and the second gas is sent to the second housing portion and a second operation in which the second gas is sent to the first housing portion and the regeneration gas is sent to the second housing portion.

7. The recovery system according to any one of claims 1 to 6, further comprising a desorption gas feed path connected to the adsorption device and the membrane separation device and configured to send the desorption gas from the adsorption device to the membrane separation device.

8. The recovery system according to claim 7, further comprising a dehumidifier placed on the desorption gas feed path and configured to decrease a content of water in the desorption gas.

9. The recovery system according to claim 7, further comprising:
a regeneration gas feed path connected to the adsorption device and configured to supply the regeneration gas to the adsorption device; and
a recycling path connected to the regeneration gas feed path and the desorption gas feed path and configured to send a part of the desorption gas from the desorption gas feed path to the regeneration gas feed path.

10. The recovery system according to claim 1, further comprising a second gas feed path connected to the adsorption device and the membrane separation device and configured to send the second gas from the membrane separation device to the adsorption device.

11. The recovery system according to claim 10, further comprising a heat exchanger placed on the second gas feed path and configured to cool the second gas.

12. The recovery system according to claim 10, further comprising a raw material gas feed path connected to the second gas feed path and configured to send raw material gas including acidic gas to the second gas feed path.

13. The recovery system according to claim 1, wherein the regeneration gas is combustion gas generated by combustion of a target.

14. A recovery method for acidic gas, comprising:
bringing an adsorbent having adsorbed acidic gas into contact with regeneration gas to desorb the acidic gas from the adsorbent; and
separating desorption gas including the regeneration gas and the acidic gas by a separation membrane into first gas having a higher content of the acidic gas than the desorption gas and second gas having a lower content of the acidic gas than the desorption gas.

15. The recovery method according to claim 14, further comprising bringing the second gas into contact with the adsorbent to cause the adsorbent to adsorb the acidic gas included in the second gas.
